# EUROPEAN PATENT SPECIFICATION

(11) **EP 4 261 597 B1**
(45) Date of publication and mention of the grant of the patent: **04.03.2026**
(21) Application number: 23164623.3
(22) Date of filing: 28.03.2023
(51) Int. Cl.: G02B 27/01, G02B 27/10, G02B 27/28

(54) **FOVEATED NEAR EYE DISPLAY WITH RETINAL RESOLUTION AND LARGE FIELD OF VIEW**
FOVEA-NAHAUGENANZEIGE MIT RETINALER AUFLÖSUNG UND GROSSEM SICHTFELD
DISPOSITIF D'AFFICHAGE FOVÉAL PROCHE DE L'OEIL AVEC RÉSOLUTION RÉTINIENNE ET GRAND CHAMP DE VISION

(30) Priority: 05.04.2022 US 202263327781 P; 07.03.2023 US 202318180115
(43) Date of publication of application: 18.10.2023
(73) Proprietor: Meta Platforms Technologies, LLC, Menlo Park, CA 94025 (US)
(72) Inventor: WANG, Xuan, Menlo Park, 94025 (US); LU, Lu, Menlo Park, 94025 (US); CHENG, Hsien-Hui, Menlo Park, 94025 (US)
(74) Representative: Murgitroyd & Company

(56) References cited:
- US-A1- 2020 142 276
- US-A1- 2021 258 549
- US-B1- 10 768 371
- US-B1- 10 955 672
- LEE CHANG-KUN ET AL: "A head-mounted compressive three-dimensional display system with polarization-dependent focus switching", PROCEEDINGS OF SPIE; [PROCEEDINGS OF SPIE ISSN 0277-786X VOLUME 10524], SPIE, US, vol. 10022, 31 October 2016 (2016-10-31), pages 100220D - 100220D, XP060081468, ISBN: 978-1-5106-1533-5, DOI: 10.1117/12.2247591

## Description

### TECHNICAL FIELD

The present disclosure generally relates to optical devices and, more specifically, to a foveated near-eye display with retinal resolution and large field of view.

### BACKGROUND

Artificial reality is a form of reality that has been adjusted in some manner before presentation to a user, which may include, e.g., virtual reality ("VR"), augmented reality ("AR"), mixed reality ("MR"), hybrid reality, or some combination and/or derivatives thereof. Artificial reality content may include computer generated content or computer generated content combined with real world captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Artificial reality may be associated with applications, products, accessories, services, or some combination thereof. The applications, products, accessories, or services may be used to create content in artificial reality and/or may be used in for performing activities in artificial reality. The artificial reality system that provides the artificial reality content may be implemented on various platforms, including a head-mounted display ("HMD") connected to a host computer system, a standalone HMD, a mobile device or computing system, or any other hardware platform capable of providing artificial reality content to one or more viewers.

US 10 955 672 B1 describes an optical assembly including at least one switchable waveplate and a reflective polarizer layer. The reflective polarizer layer is configured to pass a first polarization orientation of display light and reflect a second polarization orientation orthogonal to the first polarization orientation. The optical assembly provides a first effective focal length when the switchable waveplate is switched to a first retardance value and the optical assembly provides a second effective focal length when the switchable waveplate is switched to a second retardance value.

US 2020/142276 A1 describes optical systems that can produce digitally switchable optical power, optical pathlength, or both. It can apply to reconfigurable wide-angle optical systems that are compact, light-weight, and light-efficient. Architectures that increase pathlength can utilize polarization splitters to produce an additional round-trip of one or more optical cavities. Changing the focus distance of synthetic imagery in augmented/virtual reality systems is an example of an application where the techniques taught herein are particularly well suited. Passive double-cavity systems can be used to increase the throughput and decrease the stray-light/ghosts in polarization-based compact wide-angle lenses.

### SUMMARY

The scope of the present invention is set out in the claims appended hereto.

### BRIEF DESCRIPTION OF THE DRAWINGS

The following drawings are provided for illustrative purposes only and are not intended to limit the scope of the present disclosure. In the drawings:
FIG. 1 schematically illustrates a diagram of a system;
FIG. 2A illustrates a first optical path of an image light propagating in the system shown in FIG. 1;
FIG. 2B illustrates a second optical path of an image light propagating in the system shown in FIG. 1;
FIG. 3A illustrates a virtual image stored in a storage device, the content of which is to be presented by the system shown in FIG. 1 during a display frame of a display element include in the system;
FIG. 3B illustrates a first virtual sub-image including content of a first portion of the virtual image shown in FIG. 3A, the first virtual sub-image being displayed by the display element during a first sub-frame of the display frame;
FIG. 3C illustrates a second virtual sub-image including content of a second portion of the virtual image shown in FIG. 3A, the second virtual sub-image being displayed by the display element during a second sub-frame of the display frame;
FIG. 3D illustrates an optical path of an image light representing the first virtual sub-image shown in FIG. 3B during the first sub-frame of the display frame;
FIG. 3E illustrates an optical path of an image light representing the second virtual sub-image shown in FIG. 3C during the second sub-frame of the display frame;
FIG. 3F illustrates optical paths of the image light shown in FIG. 3D and the image light shown in FIG. 3E during the display frame;
FIG. 3G illustrates a first magnified image of the display element formed at an image plane during the first sub-frame of the display frame, with the display element displaying the first virtual sub-image shown in FIG. 3B;
FIG. 3H illustrates a second magnified image of the display element formed at the image plane during the second sub-frame of the display frame, with the display element displaying the second virtual sub-image shown in FIG. 3C;
FIG. 3I illustrates a superimposed magnified image formed at the image plane during the display frame, which combines the first magnified image shown in FIG. 3G and the second magnified image shown in FIG. 3H;
FIG. 4 is a flowchart illustrating a method for providing a retinal resolution and a large field of view ("FOV") for a display system;
FIG. 5A schematically illustrates a diagram of a near-eye display ("NED;
FIG. 5B illustrates a schematic cross-sectional view of the NED shown in FIG. 5A;
FIG. 6A illustrates a schematic three-dimensional ("3D") view of a liquid crystal polarization hologram ("LCPH") element;
FIGs. 6B and 6C schematically illustrate in-plane orientations of optically anisotropic molecules in the LCPH element shown in FIG. 6A;
FIG. 6D schematically illustrates out-of-plane orientations of optically anisotropic molecules in the LCPH element shown in FIG. 6A;
FIG. 6E schematically illustrates out-of-plane orientations of optically anisotropic molecules in the LCPH element shown in FIG. 6A;
FIG. 6F schematically illustrates polarization selective diffraction and transmission of the LCPH element shown in FIG. 6D; and
FIG. 6G schematically illustrates polarization selective converging and diverging of the LCPH element shown in FIG. 6E.

### DETAILED DESCRIPTION

Examples to aid in the understanding of the present disclosure will be described with reference to the accompanying drawings, which are merely examples for illustrative purposes and are not intended to limit the scope of the present disclosure. Wherever possible, the same reference numbers are used throughout the drawings to refer to the same or similar parts, and a detailed description thereof may be omitted.

Further, in the present disclosure, the disclosed embodiments and example, and the features of the disclosed embodiments and examples, may be combined. The described embodiments are some but not all of the embodiments of the present disclosure. Based on the disclosed embodiments, persons of ordinary skill in the art may derive other embodiments consistent with the present disclosure. For example, modifications, adaptations, substitutions, additions, or other variations may be made based on the disclosed embodiments. Such variations of the disclosed embodiments are still within the scope of the present disclosure. Accordingly, the present disclosure is not limited to the disclosed embodiments. Instead, the scope of the present disclosure is defined by the appended claims.

As used herein, the terms "couple," "coupled," "coupling," or the like may encompass an optical coupling, a mechanical coupling, an electrical coupling, an electromagnetic coupling, or any combination thereof. An "optical coupling" between two optical elements refers to a configuration in which the two optical elements are arranged in an optical series, and a light output from one optical element may be directly or indirectly received by the other optical element. An optical series refers to optical positioning of a plurality of optical elements in a light path, such that a light output from one optical element may be transmitted, reflected, diffracted, converted, modified, or otherwise processed or manipulated by one or more of other optical elements. In some embodiments, the sequence in which the plurality of optical elements are arranged may or may not affect an overall output of the plurality of optical elements. A coupling may be a direct coupling or an indirect coupling (e.g., coupling through an intermediate element).

The phrase "at least one of A or B" may encompass all combinations of A and B, such as A only, B only, or A and B. Likewise, the phrase "at least one of A, B, or C" may encompass all combinations of A, B, and C, such as A only, B only, C only, A and B, A and C, B and C, or A and B and C. The phrase "A and/or B" may be interpreted in a manner similar to that of the phrase "at least one of A or B." For example, the phrase "A and/or B" may encompass all combinations of A and B, such as A only, B only, or A and B. Likewise, the phrase "A, B, and/or C" has a meaning similar to that of the phrase "at least one of A, B, or C." For example, the phrase "A, B, and/or C" may encompass all combinations of A, B, and C, such as A only, B only, C only, A and B, A and C, B and C, or A and B and C.

When a first element is described as "attached," "provided," "formed," "affixed," "mounted," "secured," "connected," "bonded," "recorded," or "disposed," to, on, at, or at least partially in a second element, the first element may be "attached," "provided," "formed," "affixed," "mounted," "secured," "connected," "bonded," "recorded," or "disposed," to, on, at, or at least partially in the second element using any suitable mechanical or non-mechanical manner, such as depositing, coating, etching, bonding, gluing, screwing, press-fitting, snap-fitting, clamping, etc. In addition, the first element may be in direct contact with the second element, or there may be an intermediate element between the first element and the second element. The first element may be disposed at any suitable side of the second element, such as left, right, front, back, top, or bottom.

When the first element is shown or described as being disposed or arranged "on" the second element, term "on" is merely used to indicate an example relative orientation between the first element and the second element. The description may be based on a reference coordinate system shown in a figure, or may be based on a current view or example configuration shown in a figure. For example, when a view shown in a figure is described, the first element may be described as being disposed "on" the second element. It is understood that the term "on" may not necessarily imply that the first element is over the second element in the vertical, gravitational direction. For example, when the assembly of the first element and the second element is turned 180 degrees, the first element may be "under" the second element (or the second element may be "on" the first element). Thus, it is understood that when a figure shows that the first element is "on" the second element, the configuration is merely an illustrative example. The first element may be disposed or arranged at any suitable orientation relative to the second element (e.g., over or above the second element, below or under the second element, left to the second element, right to the second element, behind the second element, in front of the second element, etc.).

When the first element is described as being disposed "on" the second element, the first element may be directly or indirectly disposed on the second element. The first element being directly disposed on the second element indicates that no additional element is disposed between the first element and the second element. The first element being indirectly disposed on the second element indicates that one or more additional elements are disposed between the first element and the second element.

The term "processor" used herein may encompass any suitable processor, such as a central processing unit ("CPU"), a graphics processing unit ("GPU"), an application-specific integrated circuit ("ASIC"), a programmable logic device ("PLD"), or any combination thereof. Other processors not listed above may also be used. A processor may be implemented as software, hardware, firmware, or any combination thereof.

The term "controller" may encompass any suitable electrical circuit, software, or processor configured to generate a control signal for controlling a device, a circuit, an optical element, etc. A "controller" may be implemented as software, hardware, firmware, or any combination thereof. For example, a controller may include a processor, or may be included as a part of a processor.

The term "non-transitory computer-readable medium" may encompass any suitable medium for storing, transferring, communicating, broadcasting, or transmitting data, signal, or information. For example, the non-transitory computer-readable medium may include a memory, a hard disk, a magnetic disk, an optical disk, a tape, etc. The memory may include a read-only memory ("ROM"), a random-access memory ("RAM"), a flash memory, etc.

The term "film," "layer," "coating," or "plate" may include rigid or flexible, self-supporting or free-standing film, layer, coating, or plate, which may be disposed on a supporting substrate or between substrates. The terms "film," "layer," "coating," and "plate" may be interchangeable. The term "film plane" refers to a plane in the film, layer, coating, or plate that is perpendicular to the thickness direction or a normal of a surface of the film, layer, coating, or plate. The film plane may be a plane in the volume of the film, layer, coating, or plate, or may be a surface plane of the film, layer, coating, or plate. The term "in-plane" as in, e.g., "in-plane orientation," "in-plane direction," "in-plane pitch," etc., means that the orientation, direction, or pitch is within the film plane. The term "out-of-plane" as in, e.g., "out-of-plane direction," "out-of-plane orientation," or "out-of-plane pitch" etc., means that the orientation, direction, or pitch is not within a film plane (i.e., non-parallel with a film plane). For example, the direction, orientation, or pitch may be along a line that is perpendicular to a film plane, or that forms an acute or obtuse angle with respect to the film plane. For example, an "in-plane" direction or orientation may refer to a direction or orientation within a surface plane, an "out-of-plane" direction or orientation may refer to a thickness direction or orientation non-parallel with (e.g., perpendicular to) the surface plane. In some embodiments, an "out-of-plane" direction or orientation may form an acute or right angle with respect to the film plane.

The term "orthogonal" as in "orthogonal polarizations" or the term "orthogonally" as in "orthogonally polarized" means that an inner product of two vectors representing the two polarizations is substantially zero. For example, two lights or beams with orthogonal polarizations (or two orthogonally polarized lights or beams) may be two linearly polarized lights (or beams) with two orthogonal polarization directions (e.g., an x-axis direction and a y-axis direction in a Cartesian coordinate system) or two circularly polarized lights with opposite handednesses (e.g., a left-handed circularly polarized light and a right-handed circularly polarized light).

The wavelength ranges, spectra, or bands mentioned in the present disclosure are for illustrative purposes. The disclosed optical device, system, element, assembly, and method may be applied to a visible wavelength band, as well as other wavelength bands, such as an ultraviolet ("UV") wavelength band, an infrared ("IR") wavelength band, or a combination thereof.

The term "optic axis" may refer to a direction in a crystal. A light propagating in the optic axis direction may not experience birefringence (or double refraction). An optic axis may be a direction rather than a single line: lights that are parallel to that direction may experience no birefringence.

The term "substantially" or "primarily" used to modify an optical response action, such as transmit, reflect, diffract, block or the like that describes processing of a light means that a major portion, including all, of a light is transmitted, reflected, diffracted, or blocked, etc. The major portion may be a predetermined percentage (greater than 50%) of the entire light, such as 100%, 95%, 90%, 85%, 80%, etc., which may be determined based on specific application needs.

Foveated near-eye displays ("NEDs") can be used to deliver immersive experience of mixed reality. A foveated NED delivers high resolution images in the eye gaze direction of a user (or in the central portion of a field of view ("FOV")), along with low resolution peripheral images at the peripheral portions of the FOV, which allows the display specification to be more flexible and practical. However, it is challenging to design a compact optical system that provides both of the retinal resolution and a large FOV. Current display technology does not support a high angular resolution within a large FOV, e.g., 5k resolution for 1 arcminute within ± 60 ° FOV. In view of the limitations in the conventional technologies, the present disclosure provides a foveated NED with a small form factor, a light weight, a high resolution (e.g., retinal resolution), and a large FOV. The disclosed foveated NED may be implemented into an artificial reality system in the form of eyeglasses, goggles, a helmet, a visor, or some other type of eyewear to reduce the form factor of the system and improve the user experience.

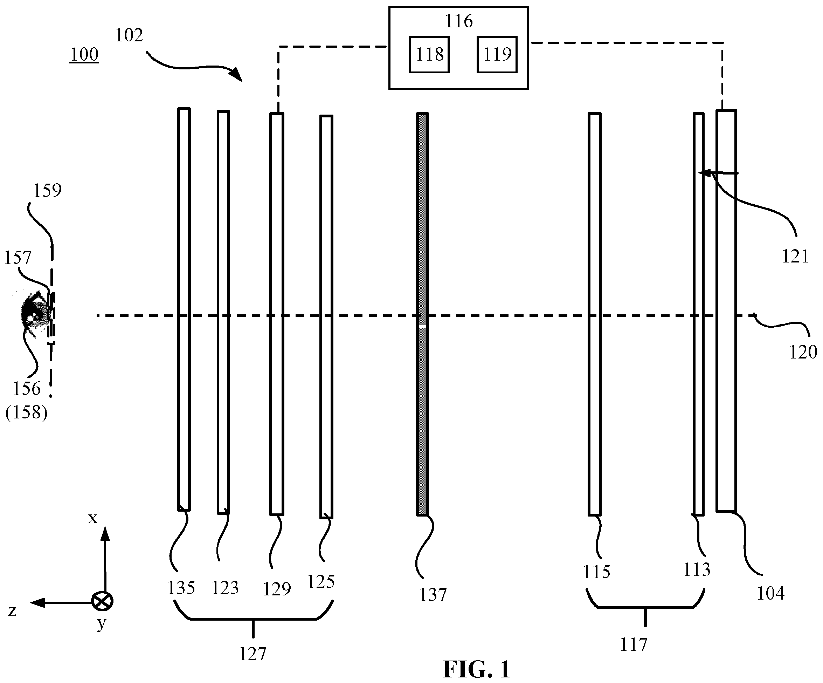

FIG. 1 schematically illustrates a diagram of a system 100. In some examples, the system 100 may be a part of an NED. As shown in FIG. 1, the system 100 may include a light source 104. The light source 104 may be a light outputting device, such as a display element. For discussion purposes, the light source 104 is also referred to as the display element 104. The system 100 may also include a lens assembly 102 disposed between the display element 104 and an eye-box region 159 where an eye 156 of a user may be located. The lens assembly 102 may be configured to guide an image light emitted by the display element 104 to the eye-box region 159. In some examples, the system 100 may also include a controller 116 configured to control the lens assembly 102 and the display element 104. The controller 116 may include a processor or processing unit 119. The processor 119 may be any suitable processor, such as a central processing unit ("CPU"), a graphic processing unit ("GPU"), etc. The controller 116 may include a storage device 118. The storage device 118 may be a non-transitory computer-readable medium, such as a memory, a hard disk, etc. The storage device 118 may be configured to store data or information, including computer-executable program instructions or codes, which may be executed by the processor 119 to perform various controls or functions described in the methods or processes disclosed herein.

The display element 104 may be configured to output an image light 121 representing a virtual image (or a portion of the virtual image) propagating toward the lens assembly 102. The lens assembly 102 may focus the image light 121 to propagate though one or more exit pupils 157 in the eye-box region 159. In some examples, each light outputting unit of the display element 104 may output a bundle of diverge rays (that is a portion of the image light 121), and the lens assembly 102 may be configured to convert the bundle of diverge rays to a bundle of parallel rays propagating through one or more exit pupils 157 in the eye-box region 159. In some examples, the bundle of parallel rays may substantially cover the entire eye-box region 159. For illustrative purposes, FIG. 1 shows a single ray of the image light 121 output from a light outputting unit at an upper portion of the display element 104. The exit pupil 157 may be a spatial zone where an eye pupil 158 of the eye 156 may be positioned in the eye-box region 159 to perceive the virtual image (or a portion of the virtual image).

For illustrative purposes, FIG. 1 shows a single display element 104 for a single eye 156 of the user. In some examples, the system 100 may include multiple display elements 104, such as two display elements 104 for both eyes of the user. The display element 104 may include a display panel, such as a liquid crystal display ("LCD") panel, a liquid-crystal-on-silicon ("LCoS") display panel, an organic light-emitting diode ("OLED") display panel, a micro organic light-emitting diode ("micro-OLED") display, a micro light-emitting diode ("micro-LED") display panel, a mini-LED display, a digital light processing ("DLP") display panel, a laser scanning display panel, or a combination thereof. In some examples, the display element 104 may include a self-emissive panel, such as an OLED display panel, a micro-OLED display panel, a micro-LED display panel, a mini-LED display panel, or a laser scanning display panel, etc. In some examples, the display element 104 may include a display panel that is illuminated by an external source, such as an LCD panel, an LCoS display panel, or a DLP display panel. Examples of an external source may include a laser, an LED, an OLED, or a combination thereof.

The lens assembly 102 may include a first optical component 117, a second optical component 127, and a third optical component 137 arranged in an optical series, with the third optical component 137 disposed between the first optical component 117 and the second optical component 127. The first optical component 117 may be spaced apart from the second optical component 127 by a predetermined gap. In some examples, the third optical component 137 may include a polarization non-selective reflector. A polarization non-selective reflector may reflect an input light independent of the polarization. An example of the polarization non-selective reflector is a polarization non-selective partial reflector configured to partially transmit a portion of an input light and partially reflect a portion of the input light, independent of the polarization of the input light. The polarization non-selective reflector may also be simply referred to as a "partial reflector" in the following descriptions. Examples of the polarization non-selective partial reflector may include a volume Bragg grating ("VBG"), a 50:50 mirror (transmitting 50% and reflecting 50%), etc. The polarization non-selective partial reflector may be configured with or without an optical power. For the polarization non-selective reflector, the percentages of the input light for the transmitted portion and the reflected portion may be any suitable percentages, such as 10%/90%, 10%/80%, 30%/70%, 40%/60%, 50%/50%, etc. In the example shown in FIG. 1, the third optical component 137 may include a polarization non-selective (i.e., independent) partial reflector, e.g., a 50:50 mirror. Thus, the third optical component 137 is also referred to as a mirror 137.

In some examples, the first optical component 117 may be configured as a reflective and polarization selective optical component with a lens function (i.e., configured with an optical power). For example, the first optical component 117 may include a single reflective and polarization selective optical element with a lens function (e.g., a single reflective and polarization selective lens), or may include two optical elements respectively configured with a polarization selective lens function and a polarization selective reflection function. In some examples, the first optical component 117 may include a polarization selective reflector 115. A polarization selective reflector may be configured to reflect an input light having a first polarization (e.g., a circular polarization, or linear polarization), and transmit an input light having a second polarization (e.g., an orthogonal circular polarization, or an orthogonal linear polarization) different from (e.g., orthogonal to) the first polarization. Examples of the polarization selective reflector may include a linear reflective polarizer, a circular reflective polarizer, etc. The polarization selective reflector may or may not be configured with an optical power. When configured with an optical power, the polarization selective reflector may also function as a reflective lens to backwardly diverge or converge an input light having the first polarization, and transmit an input light having the second polarization while substantially maintaining the propagation direction of the input light. For discussion purposes, the polarization selective reflector configured with an optical power may also be referred to as a reflective polarization selective lens.

A reflective polarization volume hologram ("PVH") element based on self-organized cholesteric liquid crystals ("CLCs") is an example of polarization selective reflector. A reflective PVH element with an optical power (also referred to as PVH lens) is an example of reflective polarization selective lens. For discussion purposes, the reflective PVH lens may also be referred to as a slanted or patterned CLC lens. The reflective PVH lens may be narrowband (e.g., including a single CLC layer having a fixed helical pitch) or broadband (e.g., including a CLC layer having a gradient helical pitch, or a plurality of CLC layers having different helical pitches). The reflective PVH element described herein may be fabricated based on various methods, such as holographic interference, laser direct writing, ink-jet printing, and various other forms of lithography. Thus, a "hologram" described herein is not limited to creation by holographic interference, or "holography."

In the example shown in FIG. 1, the first optical component 117 may include the polarization selective reflector 115. In some examples, the polarization selective reflector 115 may be configured with an optical power (also referred to as polarization selective reflective lens 115). For example, the polarization selective reflector 115 may include a PVH lens or CLC lens configured to substantially reflect an input light having a first polarization (e.g., a right-handed circularly polarized ("RHCP") light), and substantially transmit an input light having a second polarization (e.g., a left-handed circularly polarized ("LHCP") light), which may be orthogonal to the first polarization. In some examples, the polarization selective reflector 115 may converge the input light having the first polarization (e.g., RHCP light) while reflecting the input light, and substantially maintaining the propagation direction of the input light having the second polarization (e.g., LHCP light) while transmitting the input light. In some examples, the polarization selective reflector 115 may include a PVH element or CLC element configured with a zero optical power for both of the input light having the first polarization (e.g., RHCP light) and the input light having the second polarization (e.g., LHCP light).

In some examples, the first optical component 117 may also include a first polarizer 113 coupled with the polarization selective reflector 115. The first polarizer 113 may be disposed between the polarization selective reflector 115 and the display element 104 (i.e., disposed at a side of the polarization selective reflector 115 opposite to a side that faces the mirror 137). In some examples, the first polarizer 113 may be an absorptive polarizer configured to transmit an input light having the second polarization (e.g., LHCP light), and block, via absorption, an input light having the first polarization (e.g., RHCP light). In some examples, the display element 104 may be configured to output the image light 121 that is an unpolarized or linearly polarized image light. The first polarizer 113 may be configured to convert the image light 121 into a polarized image light having the second polarization, e.g., a circularly polarized image light having a second handedness (e.g., an LHCP light) propagating toward the polarization selective reflector 115. In some examples, the first polarizer 113 may be omitted.

The second optical component 127 may be configured to converge the image light received from the mirror 137. In some examples, the second optical component 127 may include a first transmissive lens 125, a polarization switch 129, and a second transmissive lens 135 arranged in a stack configuration. In some examples, as shown in FIG. 1, the polarization switch 129 may be disposed between the first transmissive lens 125 and the second transmissive lens 135, and the first transmissive lens 125 may be disposed between the mirror 137 and the polarization switch 129.

A transmissive lens may converge or diverge an input light while transmitting the input light. A transmissive lens may be polarization selective or polarization non-selective. In the disclosed examples, the first transmissive lens 125 may be a polarization selective transmissive lens. In some examples, the first transmissive lens 125 may include a Pancharatnam-Berry Phase ("PBP") lens configured to focus or converge an input light having a predetermined polarization while transmitting the input light, and defocus or diverge an input light having a polarization that is orthogonal to the predetermined polarization while transmitting the input light. In other words, the first transmissive lens 125 may provide a positive optical power to an input light having the predetermined polarization, and a negative optical power to an input light having the polarization that is orthogonal to the predetermined polarization. In some examples, the first transmissive lens 125 may change the polarization of the input light to an orthogonal polarization while transmitting the input light. For example, the first transmissive lens 125 may be configured to converge an input light having the second polarization (e.g., an LHCP light) as an output light having the first polarization (e.g., an RHCP light), and diverge an input light having the first polarization (e.g., an RHCP light) as an output light having the second polarization (e.g., an LHCP light). In other words, the first transmissive lens 125 may provide a positive optical power to the LHCP light, and a negative optical power to the RHCP light. The provided positive optical power and negative optical power may have the same absolute value. For the input light having the first polarization or the input light having the second polarization, the first transmissive lens 125 may provide a fixed optical power or an adjustable optical power.

In some examples, the controller 116 may be communicatively coupled with the polarization switch 129 to control the operation states of the polarization switch 129. The polarization switch 129 may be switchable by the controller 116 between two operating states: a switching state and a non-switching state. The polarization switch 129 operating in the switching state may switch a polarization of a polarized light to an orthogonal polarization, e.g., converting an input light having the first polarization (e.g., an RHCP light) into an output light having the second polarization (e.g., an LHCP light) while transmitting the input light, or converting an input light having the second polarization (e.g., an LHCP light) into an output light having the first polarization (e.g., an RHCP light) while transmitting the input light. The polarization switch 129 operating in the non-switching state may maintain the polarization of the polarized light. The polarization switch 129 may be presumed to maintain the propagation direction of the polarized input light.

In some examples, the polarization switch 129 may include a switchable half-wave plate ("SHWP"). For example, the SHWP may include an LC layer and one or more electrodes. An external electric field (e.g., a voltage) may be applied to the LC layer through the electrodes to change the orientation of the LCs, thereby controlling the SHWP to operate in a switching state or in a non-switching state. For example, the SHWP may operate in the switching state when the applied voltage is lower than or equal to a predetermined voltage value, or operate in the non-switching state when the voltage is higher than the predetermined voltage value (and sufficiently high) to reorient the LC directors along the electric field direction. In some examples, the polarization switch 129 may include a waveplate (e.g., a quarter waveplate) and a twisted-nematic liquid crystal ("TNLC") cell, with the waveplate disposed between the TNLC cell and the first transmissive lens 125.

The second transmissive lens 135 may be a suitable transmissive lens, e.g., configured to converge the image light output from the polarization switch 129. The second transmissive lens 135 may be polarization selective or polarization non-selective. Examples of the second transmissive lens 135 may include a conventional solid lens including at least one curved surface (e.g., a glass lens, a polymer lens, or a resin lens, etc.), a liquid lens, a liquid crystal lens, a Fresnel lens, a meta lens, a PBP lens, a diffractive lens, a transmissive PVH lens, etc. In some examples, the second transmissive lens 135 may be based on sub-wavelength structures, liquid crystals, a photo-refractive holographic material, or a combination thereof The second transmissive lens 135 may be configured with a fixed optical power or a tunable optical power. For discussion purposes, FIG. 1 shows that the second transmissive lens 135 have flat surfaces. In some examples, the second transmissive lens 135 may include at least one curved surface.

In some examples, the second optical component 127 may also include a second polarizer 123 disposed between the second transmissive lens 135 and the polarization switch 129. In some examples, the second polarizer 123 may be an absorptive polarizer configured to transmit an input light having the second polarization (e.g., LHCP light), and block, via absorption, an input light having the first polarization (e.g., RHCP light). The second polarizer 123 may block, via absorption, an image light having a predetermined undesirable polarization (e.g., an RHCP image light), thereby enhancing the image quality at the eye-box region 159. In other words, the second polarizer 123 may function as a "clean up" polarizer that removes, via absorption, an image light having the predetermined undesirable polarization. In some examples, the second polarizer 123 may be omitted.

Various elements included in the system 100 are shown in FIG. 1 as having flat surfaces for illustrative purposes. In some examples, one or more elements included in the system 100 may have a curved surface. For discussion purposes, FIG. 1 shows that the various elements included in the first optical component 117 are spaced apart from one another by a gap. In some examples, the various elements included in the first optical component 117 may be stacked without a gap (e.g., through direct contact). For discussion purposes, FIG. 1 shows that the various elements included in the second optical component 127 are spaced apart from one another by a gap. In some examples, the various elements included in the second optical component 127 may be stacked without a gap (e.g., through direct contact). For discussion purposes, FIG. 1 shows that the first optical component 117 is spaced apart from the display element 104 by a gap. In some examples, the first optical component 117 may be stacked with the display element 104 without a gap (e.g., through direct contact). For discussion purposes, FIG. 1 shows that the second optical component 127 is spaced apart from the mirror 137 by a gap. In some examples, the second optical component 127 may be stacked with the mirror 137 without a gap (e.g., through direct contact). In some examples, the lens assembly 102 may include additional elements that are not shown in FIG 1. For example, the lens assembly 102 may also include a third polarizer (e.g., a circular polarizer) disposed between the eye-box region 159 and the second transmissive lens 135 to suppress the reflection from the eye 156.

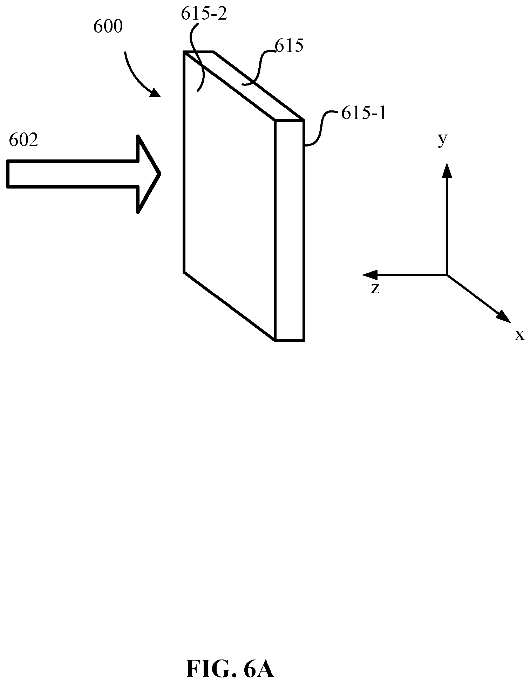

In some examples, the reflective PVH or CLC element (e.g., the first polarization selective reflector 115) and the PBP lens (e.g., the first transmissive lens 125, and the second transmissive lens 135) included in the lens assembly 102 may also be referred to as liquid crystal polarization holograms ("LCPHs") or LCPH elements. LCPH elements have features such as small thickness (~1 um), light weight, compactness, large aperture, high efficiency, simple fabrication, etc. The LCPH elements may be fabricated based on a liquid crystal ("LC") material or a birefringent photo-refractive holographic material other than LCs. The LCPH elements described herein may be fabricated based on various methods, such as holographic interference, laser direct writing, ink-jet printing, and various other forms of lithography. Thus, a "hologram" described herein is not limited to creation by holographic interference, or "holography." Examples of LCPH elements that may be included in the lens assembly 102 will be explained in connection with FIGs. 6A-6G.

In the disclosed examples, the lens assembly 102 may be configured to provide two different optical paths to image lights output from the display element 104 toward the eye-box region 159. The two optical paths may include a first optical path for providing a periphery view with a relatively large FOV and a relatively low angular resolution, and a second optical path for providing a foveal view with a relatively small FOV and a relatively high angular resolution (e.g., retinal resolution). For discussion purposes, the first optical path and the second optical path may also be referred to as a periphery path and a foveal path, respectively. The lens assembly 102 may be switchable, via the controller 116, between providing the first optical path and providing the second optical path. For example, the controller 116 may be configured to control the lens assembly 102 to switch between providing the first optical path and providing the second optical path in a time-sequential manner, via controlling the polarization switch 129 to switch between operating in the switching state and the non-switching state in a time-sequential manner.

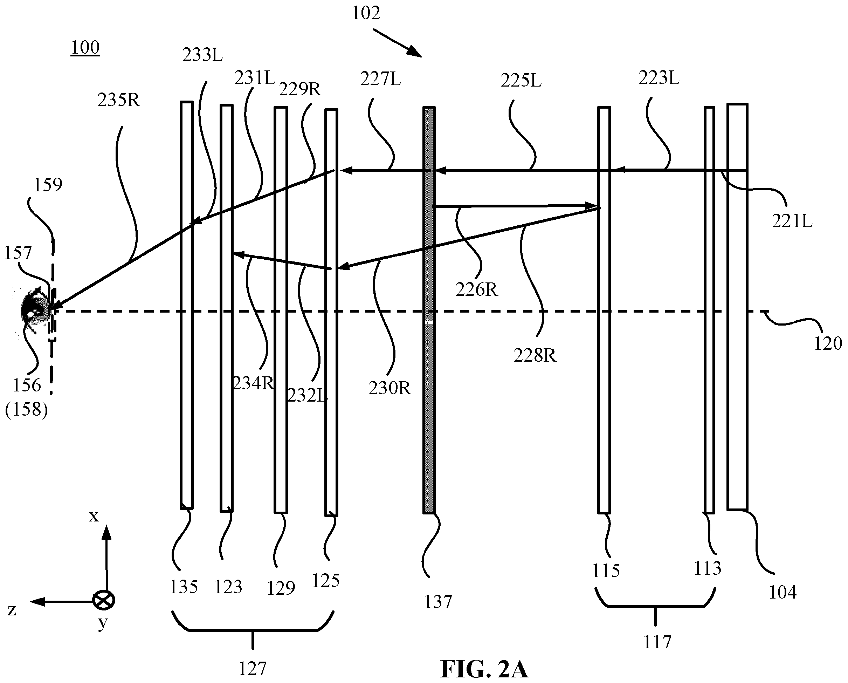

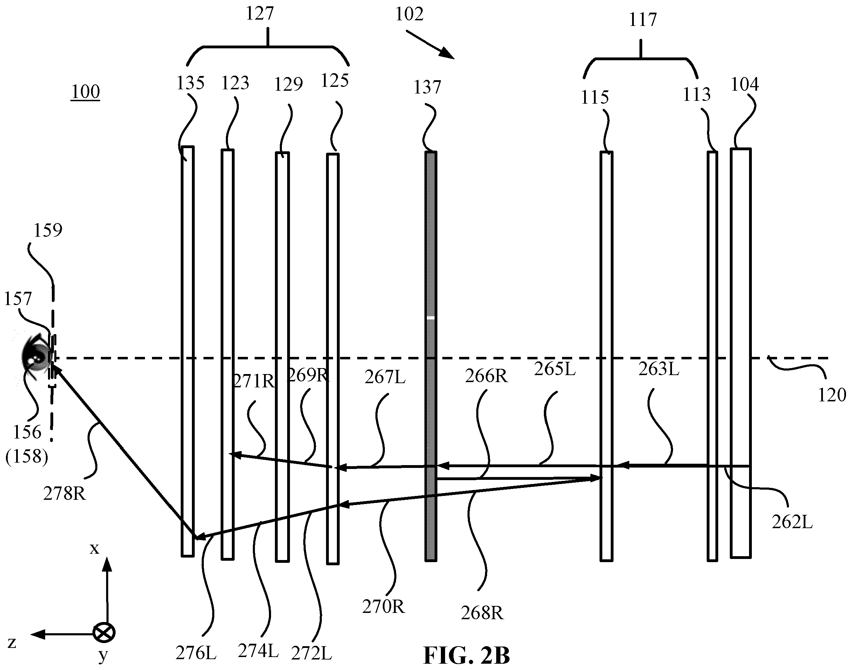

FIG. 2A illustrates an x-z sectional view of a first optical path (or periphery path) of an image light output from the display element 104 in the system 100 shown in FIG. 1. In FIG. 2A, to provide the first optical path, the controller 116 may control the polarization switch 129 to operate in the switching state. FIG. 2B illustrates an x-z sectional view of a second optical path (or foveal path) of an image light output from the display element 104 in the system 100 shown in FIG. 1. In FIG. 2B, to provide the second optical path, the controller 116 may control the polarization switch 129 to operate in the non-switching state. In below figures, the letter "R" appended to a reference number (e.g., "229R") denotes a right-handed circularly polarized ("RHCP") light, and the letter "L" appended to a reference number (e.g., "221L") denotes a left-handed circularly polarized ("LHCP") light.

For discussion purposes, in FIGs. 2A and 2B, the polarization selective reflector 115 may be a right-handed PVH or CLC lens configured to reflect and converge an RHCP light and transmit an LHCP light while maintaining the propagation direction of the LHCP light. For discussion purposes, each of the first transmissive lens 125 and the second transmissive lens 135 may be a left-handed PBP lens configured to converge an LHCP light and diverge an RHCP light. For discussion purposes, the display element 104 may output an LHCP image light. For discussion purposes, each of the first polarizer 113 and the second polarizer 123 may transmit an LHCP light and block an RHCP light via absorption.

As shown in FIG. 2A, the display element 104 may output a first image light 221L (e.g., representing a first portion of a virtual image displayed by the display element 104). The first polarizer 113 may convert the image light 221L into an image light 223L propagating toward the polarization selective reflector 115. The polarization selective reflector 115 may substantially transmit the image light 223L as an image light 225L propagating toward the mirror 137. The mirror 137 may transmit a first portion of the image light 225L as an image light 227L propagating toward the first transmissive lens 125, and reflect a second portion of the image light 225L back to the polarization selective reflector 115 as an image light 226R. The first transmissive lens 125 may converge the image light 227L as an image light 229R propagating toward the polarization switch 129. The polarization switch 129 operating in the switching state may transmit the image light 229R as an image light 231L propagating toward the second polarizer 123. The second polarizer 123 may transmit the image light 231L as an image light 233L propagating toward the second transmissive lens 135. The second transmissive lens 135 may converge the image light 233L as an image light 235R propagating toward the eye-box region 159. The light intensity of the image light 235R may be about half (i.e., 50%) of the light intensity of the image light 221L output from the display element 104. Thus, the eye 156 positioned at the exit pupil 157 within the eye-box region 159 may perceive the image light 235R representing the first portion of the virtual image displayed by the display element 104.

In addition, the polarization selective reflector 115 may reflect and converge the image light 226R received from the mirror 137 as an image light 228R propagating toward the mirror 137. The mirror 137 may transmit a first portion of the image light 228R as an image light 230R propagating toward the first transmissive lens 125, and reflect a second portion of the image light 228R back to the polarization selective reflector 115 as an LHCP image light (not shown). The first transmissive lens 125 may diverge the image light 230R as an image light 232L propagating toward the polarization switch 129. The polarization switch 129 operating in the switching state may transmit the image light 232L as an image light 234R propagating toward the second polarizer 123. The second polarizer 123 may block the image light 234R via absorption. Thus, the eye 156 positioned at the exit pupil 157 within the eye-box region 159 may not perceive the image light 234R and, thus, may not perceive a ghost image formed by the image light 234R.

As shown in FIG. 2B, the display element 104 may output a second image light 262L (e.g., representing a second portion of the same virtual image displayed by the display element 104). The first polarizer 113 may convert the image light 262L into an image light 263L propagating toward the polarization selective reflector 115. The polarization selective reflector 115 may substantially transmit the image light 263L as an image light 265L propagating toward the mirror 137. The mirror 137 may transmit a first portion of the image light 265L as an image light 267L propagating toward the first transmissive lens 125, and reflect a second portion of the image light 265L back to the polarization selective reflector 115 as an image light 266R.

The polarization selective reflector 115 may reflect and converge the image light 266R as an image light 268R propagating toward the mirror 137. The mirror 137 may transmit a first portion of the image light 268R as an image light 270R propagating toward the first transmissive lens 125, and reflect a second portion of the image light 268R back to the polarization selective reflector 115 as an LHCP image light (not shown). The first transmissive lens 125 may diverge the image light 270R as an image light 272L propagating toward the polarization switch 129. The polarization switch 129 operating in the non-switching state may transmit the image light 272L as an image light 274L propagating toward the second polarizer 123. The second polarizer 123 may transmit the image light 274L as an image light 276L propagating toward the second transmissive lens 135. The second transmissive lens 135 may converge the image light 276L as an image light 278R propagating toward the eye-box region 159. The light intensity of the image light 278R may be about 25% of the light intensity of the image light 262L output from the display element 104. Thus, the eye 156 positioned at the exit pupil 157 within the eye-box region 159 may perceive the image light 278R representing the second portion of the virtual image displayed by the display element 104.

In addition, the first transmissive lens 125 may converge the image light 267L received from the mirror 137 as an image light 269R propagating toward the polarization switch 129. The polarization switch 129 operating in the non-switching state may transmit the image light 269R as an image light 271R propagating toward the second polarizer 123. The second polarizer 123 may block the image light 271R via absorption. Thus, the eye 156 positioned at the exit pupil 157 within the eye-box region 159 may not perceive the image light 271R and, thus, may not perceive a ghost image formed by the image light 271R.

Referring to FIGs. 2A and 2B, the optical path of the image light 262L may be folded two times between the mirror 137 and the polarization selective reflector 115, thereby increasing the length of the optical path of the image light 262L from the display element 104 to the eye-box region 159 from the display element 104 to the eye-box region 159, the second optical path (or the foveal path) of the image light 262L shown in FIG. 2B may be configured to be longer than the first optical path (or the periphery path) of the image light 221L shown in FIG. 2A. As the field of view ("FOV") depends on the size of the display element 104 (e.g., the panel size) and the distance of the optical path from the display element 104 to the eye-box region 159, a longer optical path from the display element 104 to the eye-box region 159 may lead to a smaller FOV when the size of the display element 104 (e.g., the panel size) is fixed. Thus, the first optical path (or the periphery path) of the image light 221L shown in FIG. 2A may provide a larger FOV than the second optical path (or the foveal path) of the image light 262L shown in FIG. 2B.

In addition, the respective optical powers of the polarization selective reflector 115, the first transmissive lens 125, and the second transmissive lens 135 may be configured, such that the lens assembly 102 may be configured to provide a greater optical power to an image light output from the display element 104 when the polarization switch 129 operates in the switching state than an image light output from the display element 104 when the polarization switch 129 operates in the non-switching state. That is, the lens assembly 102 may be configured to provide a greater optical power to the image light 221L propagating along the first optical path (or the periphery path) than to the image light 262L propagating along the second optical path (or the foveal path). For example, the optical power of the polarization selective reflector 115 may be configured to be + D1 (unit: Diopter) for an RHCP light and 0 for an LHCP light, the optical power of the first transmissive lens 125 may be configured to be - D2 (unit: Diopter) for an RHCP light and + D2 (unit: Diopter) for an LHCP light, and the optical power of the second transmissive lens 135 may be configured to be + D3 (unit: Diopter) for an LHCP light, where D1 is a value greater than or equal to zero, and D2 and D3 are values greater than zero. Thus, the lens assembly 102 may provide a total optical power of (+ D2+ D3) to the image light 221L propagating along the periphery path, and a total optical power of (+ D1 - D2+ D3) to the image light 262L propagating along the foveal path. The lens assembly 102 may form a magnified, upright, virtual image of the display element 104 at the predetermined image plane, and the total optical power of (+ D2+ D3) or (+ D1- D2+ D3) provided by the lens assembly 102 may be greater than zero.

When the optical power D1 of the polarization selective reflector 115 is equal to zero, the total optical power of (+ D2+ D3) provided by the lens assembly 102 to the image light 221L is greater than the total optical power of (- D2+ D3) provided by the lens assembly 102 to the image light 262L. When optical power D1 of the polarization selective reflector 115 is greater than zero, the respective optical powers D1, D2, and D3 may be configured, such that the total optical power of (+ D2+ D3) provided by the lens assembly 102 to the image light 221L is greater than the total optical power of (+ D1- D2+ D3) provided by the lens assembly 102 to the image light 262L.

As the angular resolution (unit: pixel per degree ("PPD")) depends on the pixel pitch and the effective focal length (or the optical power) of the lens assembly 102, a longer effective focal length (or a smaller optical power) may result in a higher resolution when the pixel pitch is fixed. Thus, the second optical path (or the foveal path) of the image light 262L shown in FIG. 2B may provide a higher resolution than the first optical path (or the periphery path) of the image light 221L shown in FIG. 2A.

In some examples, the display element 104 may be configured to output the image light 221L and the image light 262L during different time periods, e.g., a first sub-frame and a second sub-frame of a display frame, respectively. Accordingly, the polarization switch 129 may operate in the switching state during the first sub-frame, and operate in the non-switching state during the second sub-frame. In the disclosed examples, the distances between the various elements (e.g., the polarization selective reflector 115, the first transmissive lens 125, and the second transmissive lens 135) included in the lens assembly 102 may be configured, and the respective optical powers of the polarization selective reflector 115, the first transmissive lens 125, and the second transmissive lens 135 may be configured, such that the lens assembly 102 may image the display element 104 to a same predetermined image plane during the first sub-frame and the second sub-frame. In some examples, when the distances between the various elements included in the lens assembly 102 are fixed, the respective optical powers of the polarization selective reflector 115, the first transmissive lens 125, and the second transmissive lens 135 may be configured, such that the lens assembly 102 may be configured to image the display element 104 to a same predetermined image plane during the first sub-frame and the second sub-frame. In other words, no matter the polarization switch 129 operates in the switching state or in the non-switching state, the lens assembly 102 may image the display element 104 to a same predetermined image plane having a same predetermined axial distance to the eye-box region 159 along the optical axis 120.

For example, when the polarization switch 129 operates in the switching state during the first sub-frame, the lens assembly 102 may form a first magnified image (having a first magnification) of the display element 104 that outputs the image light 221L propagating along the periphery path at the same predetermined image plane. When the polarization switch 129 operates in the non-switching state during the second sub-frame, the lens assembly 102 may form a second magnified image (having a second magnification) of the display element 104 that outputs the image light 262L propagating along the foveal path at the same predetermined image plane. The magnification may be calculated as the size of the magnified image divided by the size (e.g., panel size) of the display element 104. The difference between the first magnification and the second magnification may be determined, in part, by the optical power distributions among the polarization selective reflector 115, the first transmissive lens 125, and the second transmissive lens 135. In some examples, the first magnification may be configured to be greater than the second magnification.

In some examples, although not shown, the polarization switch 129 may operate in the non-switching state when the display element 104 outputs the image light 221L propagating along the periphery path, and operate in the switching state when the display element 104 outputs the image light 262L propagating along the foveal path. The second polarizer 123 may be configured to transmit an input light having the first polarization (e.g., RHCP light), and block, via absorption, an input light having the second polarization (e.g., LHCP light).

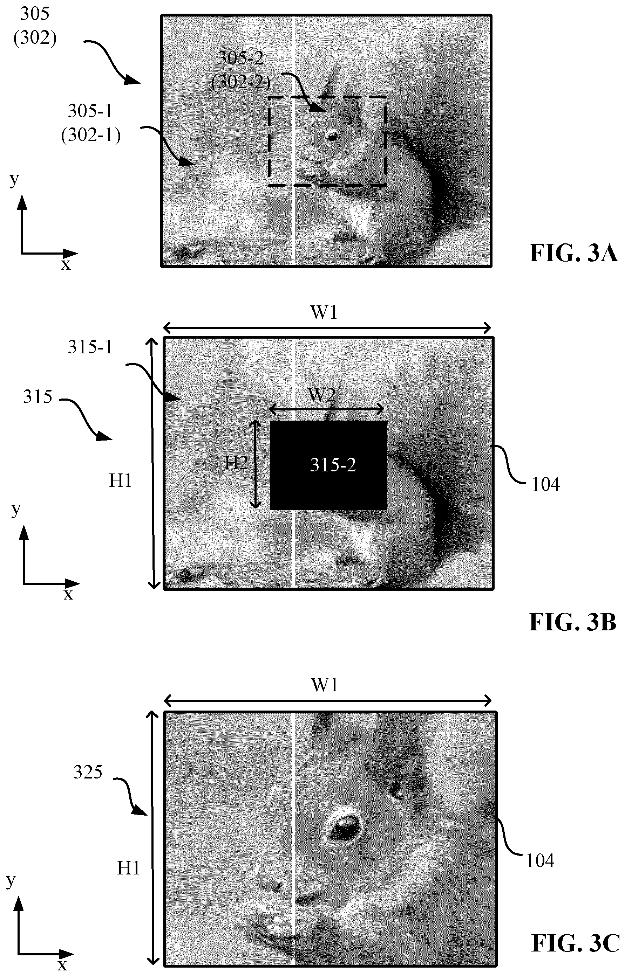

FIGs. 3A-3I illustrate the operation of the system 100 to present a magnified virtual image of high resolution and large FOV at the exit pupil 157 within the eye-box region 159 during a display frame. FIG. 3A illustrates a virtual image 305 (that is an original virtual image), stored in the storage device 118 shown in FIG. 1, the content of which is to be presented by the system 100 at the eye-box region 159 during a display frame of the display element 104. The controller 116 (shown in FIG. 1) may retrieve and process image data 302 of the original virtual image 305. In some example, the controller 116 may partition the image data 302 of the original virtual image 305 into a first image data portion 302-1 and a second image data portion 302-2. The first image data portion 302-1 may correspond to (or represent the content of) a first portion (or periphery portion) 305-1 of the original virtual image 305. The second image data portion 302-2 may correspond to (or represent the content of) a second portion (or foveal portion) 305-2 of the original virtual image 305 that is surrounded by the first portion 305-1. The aspect ratio (that is a proportional relationship between a width and a height of an image) of the second portion (or foveal portion) 305-2 may be configured to be substantially the same as the aspect ratio of the original virtual image 305.

The original virtual image 305 shown in FIG. 3A is shown for visualizing the partitions of the image data 302, and the original virtual image 305 is not actually displayed on the display element 104. Rather, the display element 104 may display a modified version of the original virtual image 305, as modified by the controller 116. After the controller 116 partitions the image data 302 of the original virtual image 305 into the two image data portions 302-1 and 302-2, the controller 116 may provide the image data portions to the display element 104 for displaying the content of the periphery portion 305-1 and the content of the foveal portion 305-2 of the original virtual image 305 during different time periods (e.g., sub-frames of the display frame).

For example, the display frame of the display element 104 may be divided into a first sub-frame and a consecutive second sub-frame. The controller 116 may control the display element 104 to display only the content of the periphery portion 305-1 in the first sub-frame and display only the content of the foveal portion 305-2 in the second sub-frame, or display only the content of the periphery portion 305-1 in the second sub-frame and display only the content of the foveal portion 305-2 in the first sub-frame. In some examples, the controller 116 may provide the first image data portion 302-1 to the display element 104 during the first sub-frame, and provide the second image data portion 302-2 to the display element 104 during the second sub-frame.

FIG. 3B illustrates a first virtual sub-image 315 displayed by the display element 104 (e.g., on the display panel) during the first sub-frame. As shown in FIG. 3B, the first virtual sub-image 315 displayed by the display element 104 may only include the content of the peripheral portion 305-1 of the original virtual image 305. The first virtual sub-image 315 may include a first portion (or periphery portion) 315-1, and a second portion (or foveal portion) 315-2 that is surrounded by the first portion 305-1. The periphery portion 315-1 of the first virtual sub-image 315 may include the content of the periphery portion 305-1 of the original virtual image 305 shown in FIG. 3A, while the foveal portion 315-2 of the first virtual sub-image 315 may not include any content of the foveal portion 305-2 of the original virtual image 305 shown in FIG. 3A, and may not include any content of the original virtual image 305. For illustrative purposes, the entire foveal portion 315-2 of the first virtual sub-image 315 is shown in FIG. 3B as a black (or dark) portion. For example, the pixels or display units of the display element 104 corresponding to the foveal portion 315-2 may be turned off. In some examples, the pixels or display units of the display element 104 corresponding to the foveal portion 315-2 may be controlled to display a color other than the black.

The sizes (or areas) of the first virtual sub-image 315, the periphery portion 315-1, and the foveal portion 315-2 may be designated as S₁, S₁₁, and S₁₂, respectively, where S₁ = S₁₁,+ S₁₂. In the examples shown in FIG. 3B, the size (or area) S₁ of the first virtual sub-image 315 may be substantially the same as a size (or area) A₀ of the entire display area of the display element 104 (e.g., the entire display panel). For example, the entire display area of the display element 104 (e.g., the entire display panel) may have a width of W1, and a height of H1. Thus, the first virtual sub-image 315 may have a width of W1 and a height of H1. The size of the first virtual sub-image 315 may be S₁=W1*H1. The aspect ratio (that is a proportional relationship between a width and a height of an image) of the first virtual sub-image 315 may be W1/H1. The foveal portion 315-2 may have a width of W2 and a height of H2. The size of the foveal portion 315-2 may be S₁₂=W2*H2, and the aspect ratio of the foveal portion 315-2 may be W2/H2. In some examples, the aspect ratio W2/H2 of the foveal portion 315-2 may be substantially the same as the aspect ratio W1/H1 of the first virtual sub-image 315.

FIG. 3C illustrates a second virtual sub-image 325 displayed by the display element 104 (e.g., on the display panel) during the second sub-frame of the display frame of the display element 104. As shown in FIG. 3C, the second virtual sub-image 325 displayed by the display element 104 during the second sub-frame may include the content of the foveal (or central) portion 305-2 of the original virtual image 305 shown in FIG. 3A, and may not include any content of the periphery portion 305-1 of the original virtual image 305 shown in FIG. 3A. FIG. 3C shows that the second virtual sub-image 325 is displayed by the entire display units or pixels of the display element 104 (e.g., the second virtual sub-image 325 substantially occupies the entire display panel or display area). The second virtual sub-image 325 may have a width of W1 and a height of H1. A size (or area) of the second virtual sub-image 325 may be S₂=W1*H1, and the aspect ratio of the second virtual sub-image 325 may be W1/H1, which may be the same as the aspect ratio of the first virtual sub-image 315 shown in FIG. 3B. The size S₂ of the second virtual sub-image 325 may be the same as the size S1 of the first virtual sub-image 315, which is substantially the same as the size (or area) A₀ of the entire display area of the display element 104 (e.g., the entire display panel).

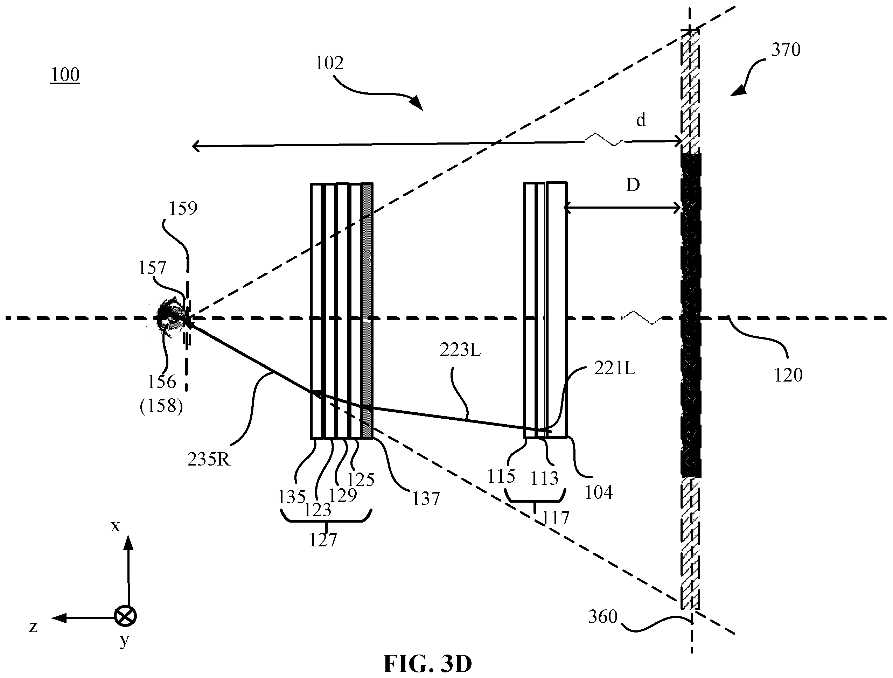

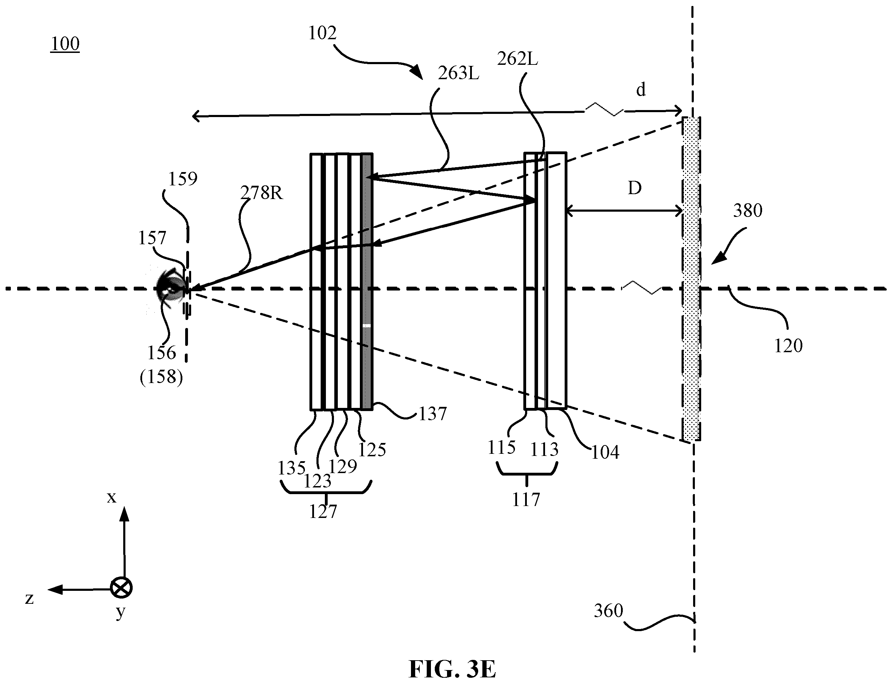

FIG. 3D illustrates an optical path of the image light 221L representing the first virtual image 315 shown in FIG. 3B during the first sub-frame of the display frame. FIG. 3E illustrates an optical path of the image light 262L representing the second virtual sub-image 325 shown in FIG. 3C during the second sub-frame of the display frame. For illustrative purposes, FIGs. 3D and 3E show that the various elements included in the second optical component 127 are stacked without a gap (e.g., through direct contact), and the second optical component 127 and the mirror 137 are stacked without a gap (e.g., through direct contact), although gaps may exist between these elements in other examples. For illustrative purposes, FIGs. 3D and 3E show that the various elements included in the first optical component 117 are stacked without a gap (e.g., through direct contact), and the first optical component 117 and the display element 104 are stacked without a gap (e.g., through direct contact), although gaps may exist between these elements in other examples. For illustrative purposes, FIGs. 3D and 3E show that the optical power D1 of the polarization selective reflector 115 is equal to zero.

The optical path of the image light 221L shown in FIG. 3D may be similar to that shown in FIG. 2A. For illustrative purposes, FIG. 3D only shows a single ray of the image light 221L output from a lower periphery of the display element 104. As shown in FIG. 3D, during the first sub-frame, the controller 116 (not shown) may control the display element 104 to output the image light 221L representing the first virtual sub-image 315 shown in FIG. 3B (which has the same content as the periphery portion 305-1 of the virtual image 305 shown in FIG. 3A). In addition, the controller 116 may control the polarization switch 129 to operate in the switching state. The image light 223L may propagate toward the eye-box region 159 along the first optical path (or the periphery path), and may be focused by the lens assembly 102 as the image light 235R propagating through the exit pupil 157 within the eye-box region 159. The lens assembly 102 may form a first magnified image 370 of the display element 104 at a predetermined image plane 360 having a predetermined axial distance d to the eye-box region 159, or a predetermine axial distance D to the display element 104, with the display element 104 displaying the first virtual sub-image 315. In some examples, the predetermined axial distance d may be much greater than the distance between the eye-box region 159 and the display element 104, and the predetermined image plane 360 may be considered to be located at an infinite distance with respect to the eye-box region 159. In some examples, the predetermined image plane 360 may be considered to be located at a finite distance with respect to the eye-box region 159.

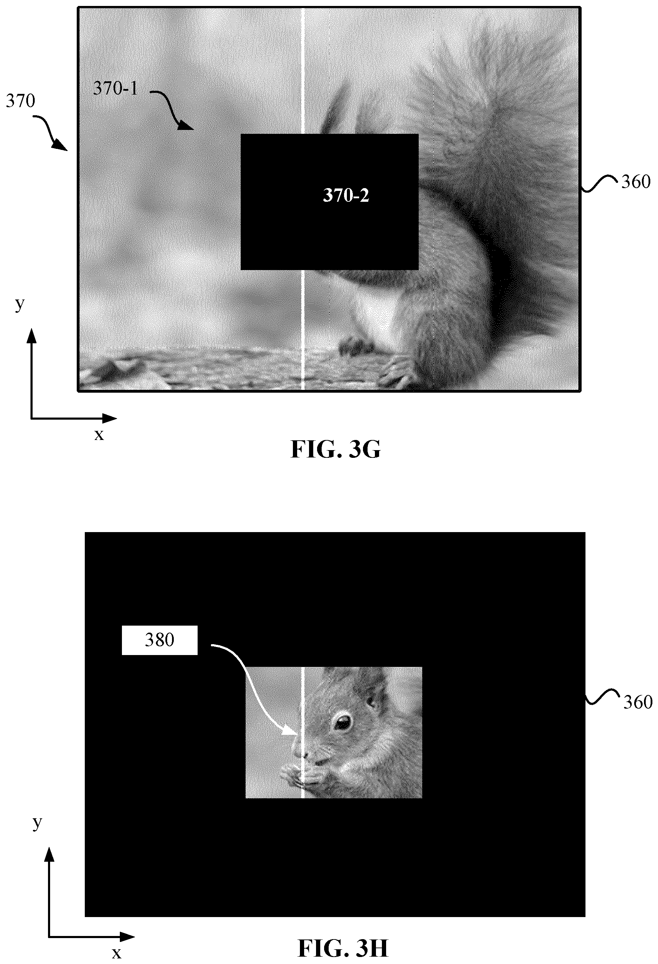

FIG. 3G illustrates the first magnified image 370 of the display element 104 formed at the predetermined image plane 360 during the first sub-frame of the display frame, with the display element 104 displaying the first virtual sub-image 315 shown in FIG. 3B. During the first sub-frame of the display frame, the controller 116 may control the lens assembly 102 to provide a first optical power and a first optical path, such that the first magnified image 370 formed at the image plane 360 by the lens assembly 102 is magnified with a first magnification. Thus, with the display element 104 displaying the first virtual sub-image 315 shown in FIG. 3B, the first magnified image 370 is a magnified image of the first virtual sub-image 315, with the first magnification. The first magnification may be calculated as the size of the first magnified image 370 divided by the size (e.g., panel size) of the display element 104. The first magnified image 370 includes a first portion (or periphery portion) 370-1, and a second portion (or foveal portion) 370-2 that is surrounded by the first portion 370-1. The periphery portion 370-1 and the foveal portion 370-2 of the first magnified image 370 shown in FIG. 3G may be magnified images of the periphery portion 315-1 and the foveal portion 315-2 of the first virtual sub-image 315 shown in FIG. 3B, respectively.

Thus, during the first sub-frame, the lens assembly 102 may form an image including the content of the periphery portion 305-1 of the original virtual image 305 shown in FIG. 3A at the predetermined image plane 360, with the first magnification. The lens assembly 102 may provide a relatively large FOV and a relatively low angular resolution during the first sub-frame. The "relatively" large FOV and low angular resolution are relative to the FOV and angular resolution provided by the lens assembly 102 during the second sub-frame. Thus, the first magnified image 370 may present the content of the periphery portion 305-1 of the original virtual image 305 shown in FIG. 3A, with a relatively large FOV and a relatively low angular resolution. Accordingly, during the first sub-frame, the eye 156 positioned at the exit pupil 157 within the eye-box region 159 may perceive the first magnified image 370 presenting the content of the periphery portion 305-1 of the original virtual image 305, with a relatively large FOV and a relatively low angular resolution.

Referring to FIG. 3E, the optical path of the image light 262L shown in FIG. 3E may be similar to that shown in FIG. 2B. For illustrative purposes, FIG. 3E only shows a single ray of the image light 262L output from an upper periphery of the display element 104. As shown in FIG. 3E, during the second sub-frame, the controller 116 may control the display element 104 to output the image light 262L representing the second virtual sub-image 325 shown in FIG. 3C (which includes the same content of the foveal portion 305-2 of the virtual image 305 shown in FIG. 3A). In addition, the controller 116 may control the polarization switch 129 to operate in the non-switching state. The image light 262L may propagate toward the eye-box region 159 along the second optical path (or the foveal path), and may be focused by the lens assembly 102 as the image light 278R propagating through the same exit pupil 157 within the eye-box region 159. The lens assembly 102 may form a second magnified image 380 of the display element 104 at the same predetermined image plane 360.

FIG. 3H illustrates the second magnified image 380 of the display element 104 formed at the predetermined image plane 360 during the second sub-frame of the display frame, with the display element 104 displaying the second virtual sub-image 325 shown in FIG. 3C. During the second sub-frame of the display frame, the controller 116 may control the lens assembly 102 to provide a second optical power and a second optical path, such that the second magnified image 380 formed at the image plane 360 by the lens assembly 102 is magnified with a second magnification. Thus, with the display element 104 displaying the second virtual sub-image 325 (as shown in FIG. 3C), the second magnified image 380 may be a magnified image of the second virtual sub-image 325, with the second magnification. The second magnification may be calculated as the size of the second magnified image 380 divided by the size (e.g., panel size) of the display element 104. The first magnification of the first magnified image 370 shown in FIG. 3G may be configured to be greater than the second magnification of the second magnified image 380 shown in FIG. 3H.

Referring to FIGs. 3G and 3H, the position of the second magnified image 380 formed during the second sub-frame at the predetermined image plane 360 may substantially match with the position of the foveal portion 370-2 of the first magnified image 370 formed during the first sub-frame at the image plane 360. The size of the second magnified image 380 formed at the image plane 360 (as shown in FIG. 3H), may be substantially the same as the size of the foveal portion 370-2 of the first magnified image 370 formed at the image plane 360 (as shown in FIG. 3G). It is noted that the sizes of the images shown in FIGs. 3B, 3C, 3G, and 3H are not to scale in terms of magnifications. The images shown in FIGs. 3G and 3H are magnified versions of the images shown in FIGs. 3B and 3C formed via the lens assembly 102, respectively.

Thus, during the second sub-frame, the lens assembly 102 may form an image displaying the content of the foveal portion 305-2 of the original virtual image 305 at the predetermined image plane 360. The lens assembly 102 may provide a relatively small FOV and a relatively high angular resolution during the second sub-frame. The second magnified image 380 may present the content of the foveal portion 305-2 of the original virtual image 305 shown in FIG. 3A with a relatively small FOV and a relatively high angular resolution. Accordingly, during the second sub-frame, the eye 156 positioned at the exit pupil 157 within the eye-box region 159 may perceive the second magnified image 380 presenting the content of the foveal portion 305-2 of the original virtual image 305, with a relatively small FOV and a relatively high angular resolution. During the entire display frame including the first sub-frame and the second sub-frame, the eye 156 may perceive a combined image (or superimposed image) of the first magnified image 370 and the second magnified image 380, which includes the same content as the original virtual image 305.

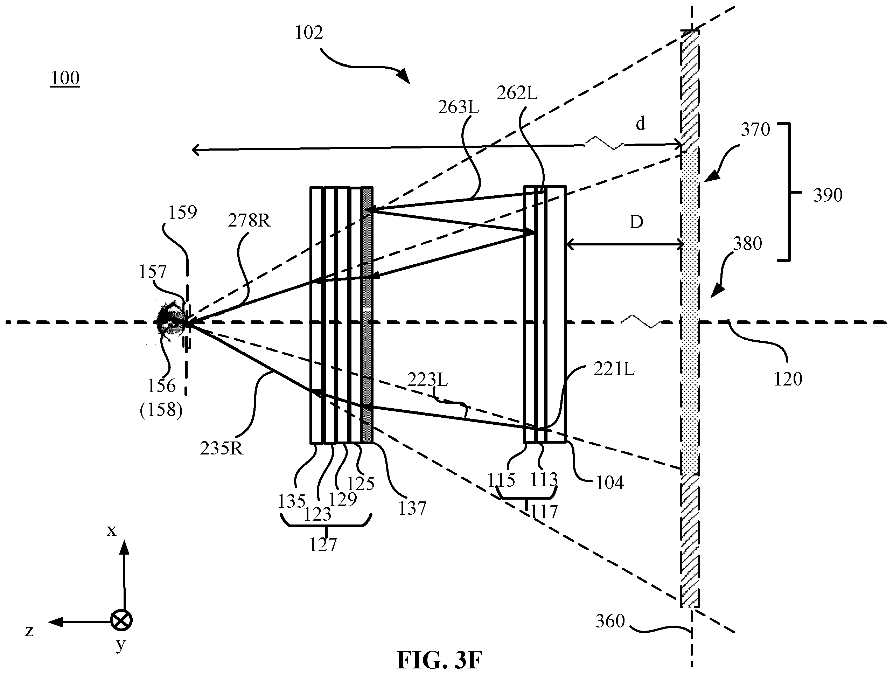

FIG. 3F illustrates both of the optical path of the image light 221L output from the display element 104 during the first sub-frame shown in FIG. 3D, and the optical path of the image light 262L output from the display element 104 during the second sub-frame shown in FIG. 3E. The image light 221L may represent the first virtual sub-image 315 shown in FIG. 3B, which includes (only) the same content as the periphery portion 305-1 of the virtual image 305 shown in FIG. 3A. The image light 262L may represent the second virtual sub-image 325 shown in FIG. 3C, which includes (only) the same content as the foveal portion 305-2 of the virtual image 305 shown in FIG. 3A. As shown in FIG. 3F, during the entire display frame (including the first sub-frame and the second sub-frame) of the display element 104, the lens assembly 102 may form a superimposed (or final) magnified image 390 of the display element 104 at the predetermined image plane 360, with the display element 104 displaying the first virtual sub-image 315 and the second virtual sub-image 325 separately in the first and second sub-frames, respectively.

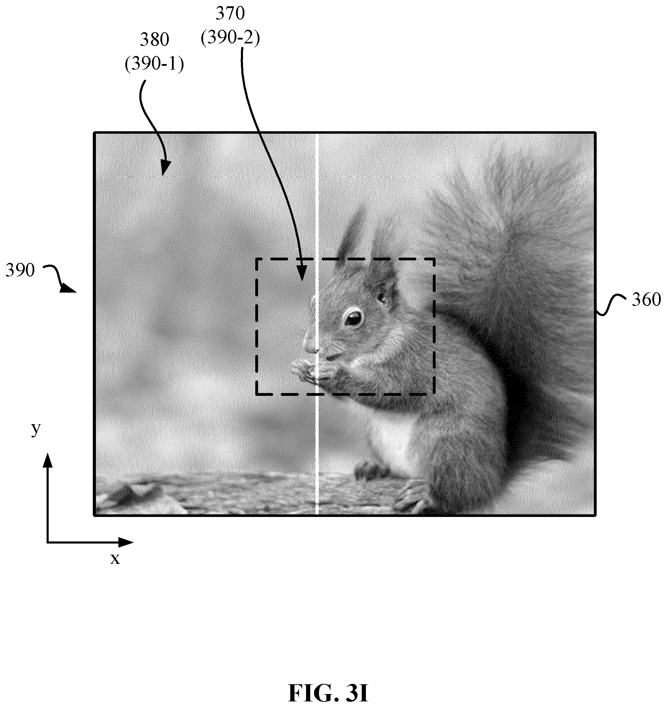

FIG. 3I illustrates the superimposed magnified image 390 of the display element 104 at the predetermined image plane 360 during the entire display frame. As shown in FIG. 3I, at the predetermined image plane 360, the superimposed magnified image 390 formed during the display frame may be a combined (or an overlay, superimposed) image of the first magnified image 370 formed during the first sub-frame and the second magnified image 380 formed during the second sub-frame.

Specifically, the superimposed magnified image 390 may include a periphery portion 390-1, and a foveal portion 390-2 surrounded by the periphery portion 390-1. The periphery portion 390-1 may correspond to (or may be formed by) the first magnified image 370, which presents the same content as the periphery portion 305-1 of the original virtual image 305 (also the same content as the periphery portion 315-1 of the first virtual sub-image 315). The foveal portion 390-2 may correspond to (or may be formed by) the second magnified image 380, which presents the same content as the foveal portion 305-2 of the original virtual image 305 (also the same content as the second virtual sub-image 325). The foveal portion 390-2 may correspond to the second magnified image 380 formed at the same position of the foveal portion 370-2 of the first magnified image 370. As the display element 104 and the lens assembly 102 are synchronized to provide a relatively large FOV and a relatively low angular resolution during the first sub-frame, and to provide a relatively small FOV and a relatively high angular resolution during the second sub-frame, the system 100 may present the periphery portion 390-1 of the superimposed magnified image 390 with a relatively large FOV and a relatively low angular resolution, and present the foveal portion 390-2 of the superimposed magnified image 390 with a relatively small FOV and a relatively high angular resolution. Accordingly, during the entire display frame, the eye 156 positioned at the exit pupil 157 within the eye-box region 159 may perceive the content of the periphery portion 305-1 of the original virtual image 305 with a relatively large FOV and a relatively low angular resolution, and the content of the foveal portion 305-2 of the original virtual image 305 with a relatively small FOV and a relatively high angular resolution.

For example, referring to FIGs. 3D-3I, in some examples, a total system length of the system 100 (that is an axial distance from the display element 104 to the eye-box region 159) may be configured to be 30 mm, and the display element 104 may be configured to include a 2.1-inch LCD panel having a pitch size of 24 µm. During the first sub-frame, the effective focal length of the system 100 may be about 28.6 mm, and the eye 156 positioned at the exit pupil 157 within the eye-box region 159 may perceive the first magnified image 370 of the display element 104, with the display element 104 displaying the content of the periphery portion 305-1 of the virtual image 305. The content of the periphery portion 305-1 may be presented to the eye 156 at a relatively large FOV (e.g., ± 40°) and a relatively low angular resolution (e.g., 2.88 arcminute). During the second sub-frame, the effective focal length of the system 100 may be about 86.4 mm, and the eye 156 positioned at the exit pupil 157 within the eye-box region 159 may perceive the second magnified image 380 of the display element 104, with substantially the entire display element 104 displaying only the content of the foveal portion 305-2 of the virtual image 305. The content of the foveal portion 305-2 of the virtual image 305 may be presented to the eye at a relatively small FOV (e.g., ± 13°) and a relatively high angular resolution (e.g., 0.95 arcminute). Thus, during the entire display frame, the eye 156 positioned at the exit pupil 157 within the eye-box region 159 may perceive the superimposed magnified image 390 presenting the content of the periphery portion 305-1 of the virtual image 305 with a relatively large FOV (e.g., ± 40°) and a relatively low angular resolution (e.g., 2.88 arcminute), and the content of the foveal portion 305-2 of the virtual image 305 with a relatively small FOV (e.g., ± 13°) and a relatively high angular resolution (e.g., 0.95 arcminute).

During the operation of the system 100, the controller 116 may control the display element 104 to switch between displaying the first virtual sub-image 315 shown in FIG. 3B and displaying the second virtual sub-image 325 shown in FIG. 3C at a predetermined frequency or predetermined frame rate. In some examples, the predetermined frequency may be at least 60 Hz according to the frame rate of the human vision. In addition, during the operation of the system 100, the controller 116 may control the polarization switch 129 to be synchronized with the display element 104, and the controller 116 may control the polarization switch 129 to switch between operating in the switching state and the non-switching state at the same predetermined frequency, e.g., 60 Hz. In other words, the switching of the polarization switch 129 between operating in the switching state and the non-switching state may be synchronized with the switching of the display element 104 between displaying the first virtual sub-image 315 shown in FIG. 3B and displaying the second virtual sub-image 325 shown in FIG. 3C at the predetermined frame rate.

For discussion purposes, FIGs. 3A-3I show that the display element 104 is controlled to display the first virtual sub-image 315 shown in FIG. 3B and the second virtual sub-image 325 shown in FIG. 3C during the first sub-frame and the second sub-frame of the same display frame, respectively. In some examples, although not shown, the display element 104 may be controlled to display the second virtual sub-image 325 shown in FIG. 3C and the first virtual sub-image 315 shown in FIG. 3B during the first sub-frame and the second sub-frame of the same display frame, respectively.

Referring to FIGs. 3A-3C, for illustrative and discussion purposes, in the above descriptions, it is presumed that the area or size S₁ of the first virtual sub-image 315 and the area or size S₂ of the second virtual sub-image 325 are the same, e.g., S₁=S₂, and they may be substantially the same as the entire display area (A₀) of the display element 104, i.e., S₁=S₂=A₀. It is understood that, in some examples, the size S₁ of the first virtual sub-image 315 or the size S₂ of the second virtual sub-image 325 may be smaller than the entire display area A₀ of the display element 104. In some examples, the size S₁ of the first virtual sub-image 315 and the size S₂ of the second virtual sub-image 325 may be different from one another. For example, the size S₂ of the second virtual sub-image 325 may be greater than the size S₁₋₂ of the foveal portion 315-2 of the first virtual sub-image 315 and smaller than the size S₁ of the first virtual sub-image 315. The aspect ratio of the second virtual sub-image 325 may be the same as the aspect ratio of the first virtual sub-image 315 (or the aspect ratio of the foveal portion 315-2 of the first virtual sub-image 315).

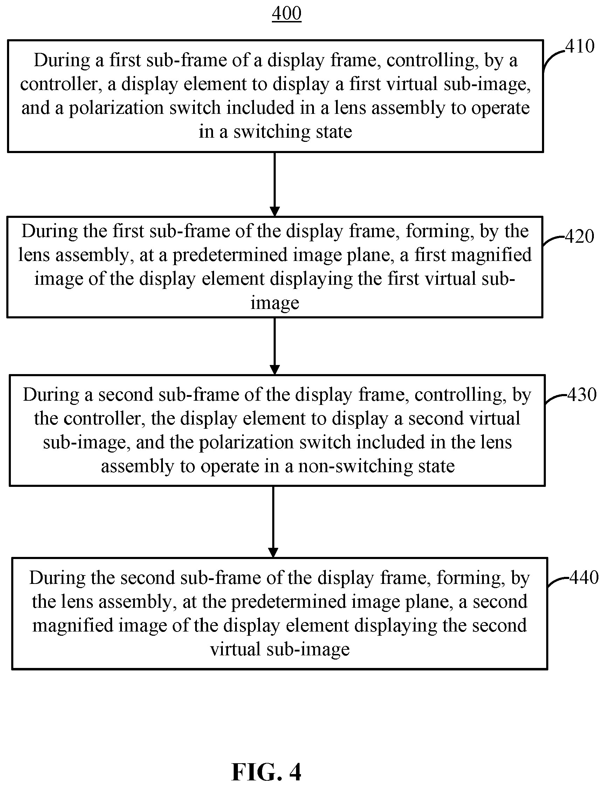

FIG. 4 is a flowchart illustrating a method 400 for providing a retinal resolution and a large FOV for a display system. As shown in FIG. 4, the method 400 may include, during a first sub-frame of a display frame, controlling, by a controller, a display element to display a first virtual sub-image, and a polarization switch included in a lens assembly to operate in a switching state (step 410). The first virtual sub-image may include content of a first portion of a virtual image (which may be referred to as an original virtual image) stored in the storage device 118. The lens assembly may include a partial reflector, a polarization selective reflector disposed at a first side of the partial reflector, the polarization switch disposed at a second side of the partial reflector, and a polarization selective transmissive lens disposed between the polarization switch and the partial reflector. The method 400 may also include, during the first sub-frame of the display frame, forming, by the lens assembly, at a predetermined image plane, a first magnified image of the display element displaying the first virtual sub-image(step 420).

The method 400 may also include during a second sub-frame of the display frame, controlling, by the controller, the display element to display a second virtual sub-image, and the polarization switch included in the lens assembly to operate in a non-switching state (step 430). The second virtual sub-image may include content of a second portion of the virtual image stored in the storage device 118. The method 400 may include during the second sub-frame of the display frame, forming, by the lens assembly, at the predetermined image plane, a second magnified image of the display element displaying the second virtual sub-image (step 440). The first magnified image and the second magnified image of the display element may have a first magnification and a second magnification, respectively. The first magnification may be different from the second magnification.

In some examples, the method 400 may include retrieving image date of the virtual image from the storage device 118, and partitioning the image date into a first image data portion and a second image data portion. The first image data portion may correspond to (or represent the content of) the first portion of the virtual image. The second image data portion may correspond to (or represent the content of) the second portion of the virtual image that is surrounded by the first portion.

In some examples, one of the first portion and the second portion of the virtual image may be a periphery portion of the virtual image, and the other one of the first portion and the second portion of the virtual image may be a foveal portion surrounded by the periphery portion. In some examples, step 410 may include, during the first sub-frame of the display frame, controlling, by the controller, the display element to output a first image light forming the first virtual sub-image that includes the content of the periphery portion of the virtual image. In some examples, step 420 may include providing, by the lens assembly, a first optical power and a first optical path to the first image light propagating from the display element to an eye-box region. In some examples, step 430 may include, during the second sub-frame of the display frame, controlling, by the controller, the display element to output a second image light forming the second virtual sub-image that includes the content of the foveal portion of the virtual image. In some examples, step 440 may include providing, by the lens assembly, a second optical power and a second optical path to the second image light propagating from the display element to the eye-box region. In some examples, the first optical power may be greater than the second optical power, and the first optical path may be shorter than the second optical path.

In some examples, the method 400 may include controlling, by the controller, the display element to switch between displaying the first virtual sub-image and the second virtual sub-image at a predetermined frequency. In some examples, the method 400 may include controlling, by the controller, the polarization switch to switch between operating in the switching state and operating in the non-switching state at the predetermined frequency. In some examples, the predetermined frequency is at least 60 Hz. In some examples, the polarization selective transmissive lens is a first transmissive lens, and the lens assembly may also include a second transmissive lens, and a polarizer disposed between the first transmissive lens and the second transmissive lens. The first transmissive lens and the second transmissive lens may be disposed at opposite sides of the polarization switch. In some examples, step 410 may include, during the first sub-frame, controlling, by the controller, the display element to output a first image light forming the first virtual sub-image that includes content of the first portion of the virtual image toward the polarization selective reflector. In some examples, step 430 may include, during the first sub-frame, transmitting, by the polarization selective reflector, the first image light having a first polarization toward the partial reflector. In some examples, step 430 may include, during the first sub-frame, transmitting, by the partial reflector, a first portion of the first image light toward the first transmissive lens. In some examples, step 430 may include, during the first sub-frame, converging, by the first transmissive lens, the first portion of the first image light toward the polarization switch as a second image light having a second polarization that is orthogonal to the first polarization. In some examples, step 430 may include, during the first sub-frame, controlling, by the controller, the polarization switch to operate in the switching state to convert the second image light into a third image light having the first polarization toward the polarizer. In some examples, step 430 may include, during the first sub-frame, transmitting, by the polarizer, the third image light toward the second transmissive lens, and converging, by the second transmissive lens, the third image light.

In some examples, step 420 may include, during the second sub-frame, controlling, by the controller, the display element to output a fourth image light forming the second virtual sub-image that includes content of the second portion of the virtual image toward the polarization selective reflector. In some examples, step 440 may include, during the second sub-frame, transmitting, by the polarization selective reflector, the fourth image light having the first polarization toward the partial reflector. In some examples, step 440 may include, during the second sub-frame, reflecting, by the partial reflector, a portion of the fourth image light back to the polarization selective reflector as a fifth image light having the second polarization. In some examples, step 440 may include, during the second sub-frame, reflecting, by the polarization selective reflector, the fifth image back to the partial reflector as a sixth image light having the second polarization. In some examples, the 440 may include, during the second sub-frame, transmitting, by the partial reflector, a portion of the sixth image light toward the first transmissive lens. In some examples, step 440 may include, during the second sub-frame, diverging, by the first transmissive lens, the portion of the sixth image light toward the polarization switch as a seventh image light having the first polarization. In some examples, step 440 may include, during the second sub-frame, controlling, by the controller, the polarization switch to operate in the non-switching state to transmit the seventh image light toward the polarizer. In some examples, step 440 may include, during the second sub-frame, transmitting, by the polarizer, the seventh image light toward the second transmissive lens; and converging, by the second transmissive lens, the seventh image light. Detailed descriptions and examples of the polarization selective reflector, the partial reflector, the first transmissive lens, the second transmissive lens, the polarization switch, and the polarizer can refer to the above descriptions rendered in connection with FIGs. 1-3F.

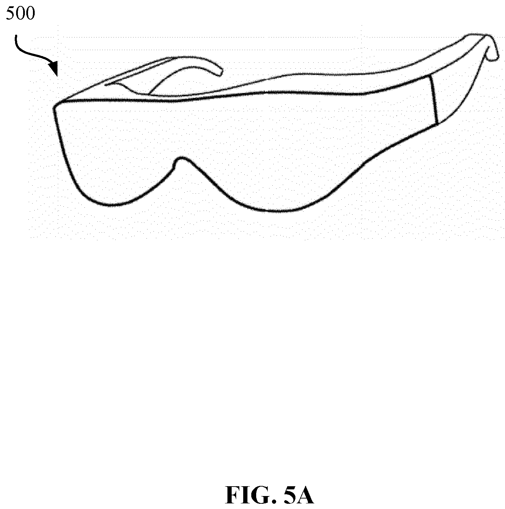

FIG. 5A illustrates a schematic diagram of an NED 500. The NED 500 may be a system configured for VR, AR, and/or MR applications. In some examples, the NED 500 may be wearable on a head of a user (e.g., by having the form of spectacles or eyeglasses, as shown in FIG. 5A) or to be included as part of a helmet wearable by the user. In some examples, the NED 500 may be mountable to the head of the user, referred to as a head-mounted display. In some examples, the NED 500 may be configured for placement in proximity of an eye or eyes of the user at a fixed location in front of the eye(s), without being mounted to the head of the user.

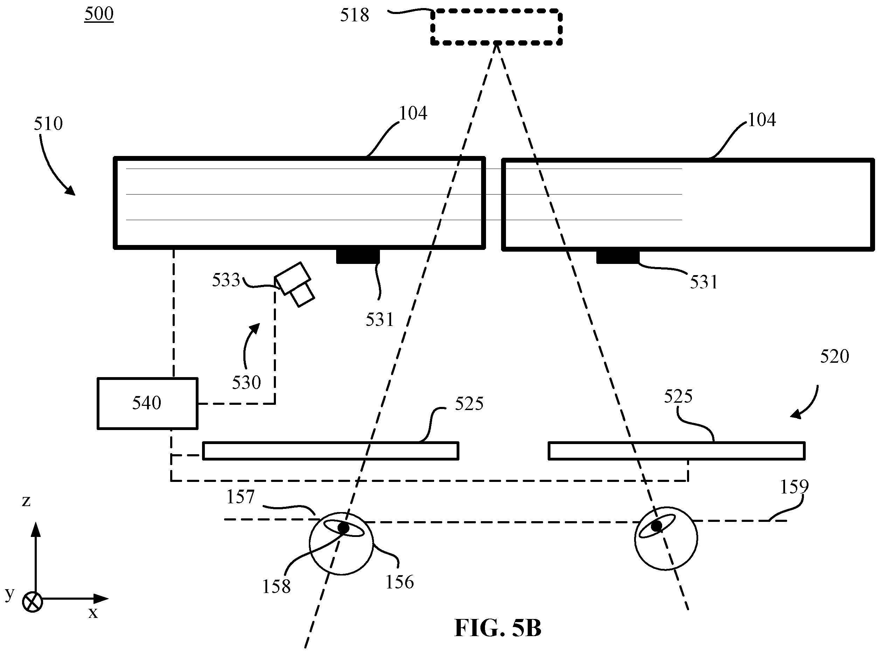

FIG. 5B schematically illustrates an x-y sectional view of the NED 500 shown in FIG. 5A. The NED 500 may include a display device 510, a viewing optics assembly 520, an object tracking system 530, and a controller 540 (e.g., a controller similar to the controller 116 shown in FIG. 1). The controller 540 may be communicatively coupled with the display device 510, the viewing optics assembly 520, and/or the object tracking system 530 to control the operations thereof.

The object tracking system 530 may be an eye tracking system and/or face tracking system. The object tracking system 530 may include an infrared ("IR") light source 531 configured to emit an IR light to illuminate the eyes 156 and/or the face. The object tracking system 530 may also include an optical sensor 533, such as a camera, configured to receive the IR light reflected by each eye 156 and generate a tracking signal relating to the eye 156, such as an image of the eye 156. In some examples, the object tracking system 530 may also include an IR deflecting element (not shown) configured to deflect the IR light reflected by the eye 156 toward the optical sensor 533.

The display device 510 may display virtual (i.e., computer-generated) images to a user. In some examples, the display device 510 may include a single or multiple display elements 104. In some examples, the display element 104 may be an electronic display. For discussion purposes, FIG. 5B shows two electronic displays for left and right eyes 156 of the user, respectively. The electronic display may include a display panel (also referred to as 104 for discussion purposes). The viewing optics assembly 520 may be arranged between the display device 510 and the eyes 156, and may be configured to guide an image light output from the display device 510 to the exit pupil 157 the eye-box region 159. The viewing optics assembly 520 may include two lens assemblies 525 for the left and right eyes 156, respectively. The lens assembly 525 may be an example of the lens assembly disclosed herein, such as the lens assembly 102 shown in FIGs. 1-2B and FIGs. 3D-3E. The operations of the display element 104 and the lens assembly 525 may refer to the above descriptions rendered in connection with FIGs. 1-3F. During the entire display frame of the display element 104, the eye 156 positioned at the exit pupil 157 within the eye-box region 159 may perceive a magnified image 518 including a periphery portion and a foveal portion that is encircled by the periphery portion. The display element 104 and the lens assembly 525 may be synchronized to provide a relatively large FOV (e.g., ± 40°) and a relatively low angular resolution (e.g., 2.88 arcminute) for the periphery portion of the magnified image 518, and a relatively small FOV (e.g., ± 13°) and a relatively high angular resolution (e.g., 0.95 arcminute) for the foveal portion of the magnified image 518.

FIG. 6A illustrates a schematic three-dimensional ("3D") view of an LCPH element 600 with a beam 602 incident onto the LCPH element 600 along a -z-axis. In some examples, the LCPH element 600 may be an example of the first polarization selective reflector 115, the first transmissive lens 125, and/or the second transmissive lens 135 included in the lens assembly 102 shown in FIGs. 1-2B and FIGs. 3D-3F. As shown in FIG. 6A, although the LCPH element 600 is shown as a rectangular plate shape for illustrative purposes, the LCPH element 600 may have a suitable shape, such as a circular shape. In some examples, one or both surfaces along the light propagating path of the beam 602 may have curved shapes. In some examples, the LCPH element 600 may be fabricated based on a birefringent medium, e.g., liquid crystal ("LC") materials, which may have an intrinsic orientational order of optically anisotropic molecules that may be locally controlled during the fabrication process. In some examples, the LCPH element 600 may be fabricated based on a birefringent photo-refractive holographic material other than LCs. In some examples, the LCPH element 600 may be fabricated based on sub-wavelength structures.

In some examples, the LCPH element 600 may include a birefringent medium (e.g., an LC material) in a form of a layer, which may be referred to as a birefringent medium layer 615. The birefringent medium layer 615 may have a first surface 615-1 and an opposing second surface 615-2. The first surface 615-1 and the second surface 615-2 may be surfaces along the light propagating path of the incident beam 602. The birefringent medium layer 615 may include optically anisotropic molecules (e.g., LC molecules) configured with a 3D orientational pattern to provide a predetermined phase profile associated with a predetermined optical response.

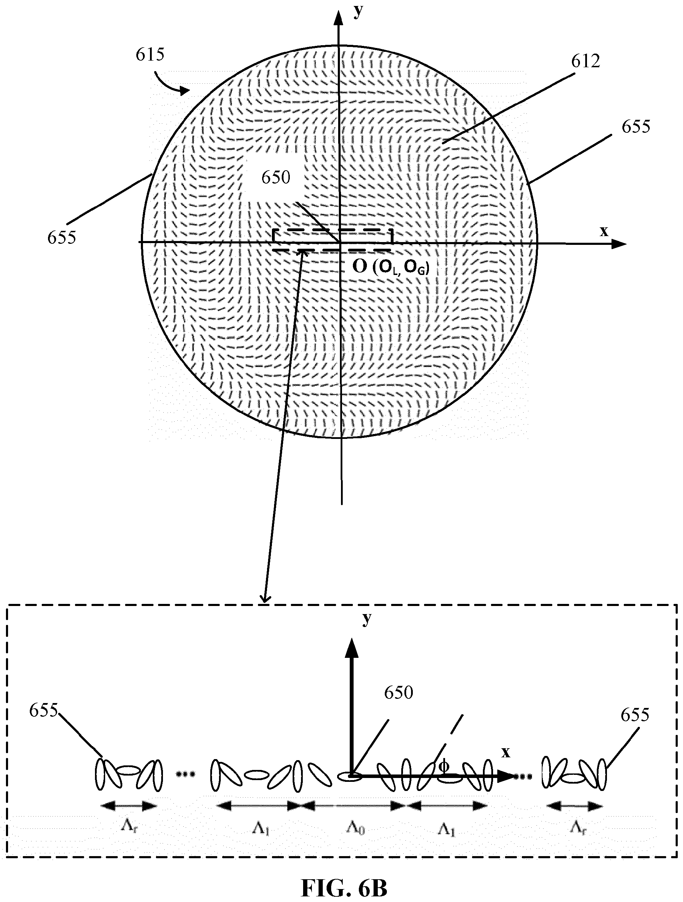

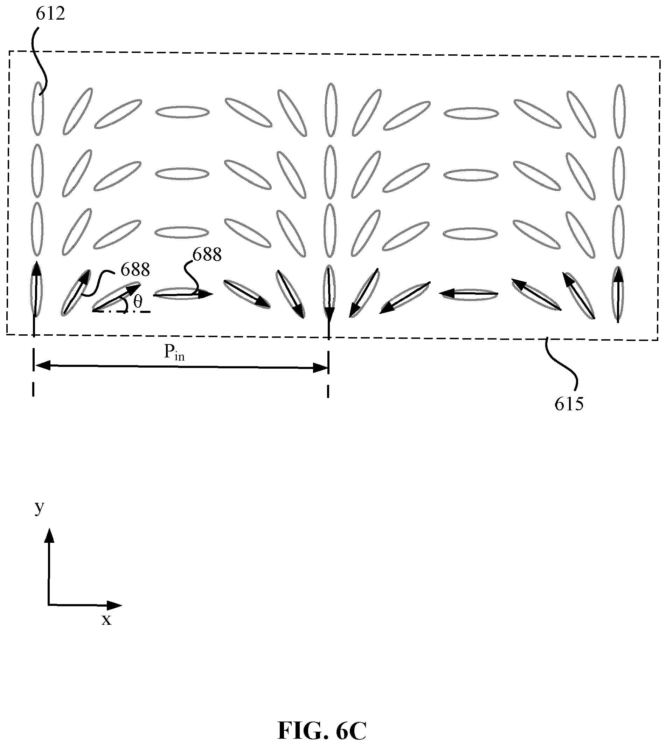

FIGs. 6B and 6C schematically illustrate x-y sectional views of a portion of the LCPH element 600 shown in FIG. 6A, showing in-plane orientations of the optically anisotropic molecules 612 in the LCPH element 600, according to various examples of the present disclosure. The in-plane orientations of the optically anisotropic molecules 612 in the LCPH element 600 shown in FIGs. 6B and 6C are for illustrative purposes. In some examples, the optically anisotropic molecules 612 in the LCPH element 600 may have other in-plane orientation patterns, which enables the LCPH element 600 to function as a suitable reflective PVH or CLC element or a PBP element, such as a reflective PVH spherical lens or a PBP spherical lens, a reflective PVH aspherical lens or a PBP aspherical lens, a reflective PVH cylindrical lens or a PBP cylindrical lens, or a reflective PVH freeform lens or a PBP freeform lens, etc.

For discussion purposes, rod-like LC molecules 612 are used as examples of the optically anisotropic molecules 612. The rod-like LC molecule 612 may have a longitudinal axis (or an axis in the length direction) and a lateral axis (or an axis in the width direction). The longitudinal axis of the LC molecule 612 may be referred to as a director of the LC molecule 612 or an LC director. An orientation of the LC director may determine a local optic axis orientation or an orientation of the optic axis at a local point of the birefringent medium layer 615. The term "optic axis" may refer to a direction in a crystal. A light propagating in the optic axis direction may not experience birefringence (or double refraction). An optic axis may be a direction rather than a single line: lights that are parallel with that direction may experience no birefringence. The local optic axis may refer to an optic axis within a predetermined region of a crystal.

FIG. 6B schematically illustrates an x-y sectional view of a portion of the LCPH element 600, with an enlarged view of a center portion of the LCPH element 600. The enlarged view illustrates an in-plane orientation pattern of the orientations of the LC directors of the LC molecules 612 located in close proximity to a surface (the first surface 615-1 or the second surface 615-2) of the birefringent medium layer 615.

FIG. 6B shows that the LCPH element 600 has a circular shape. The orientations of the LC molecules 612 located in close proximity to the surface (the first surface 615-1 or the second surface 615-2) of the birefringent medium layer 615 may be configured with an in-plane orientation pattern having a varying pitch in at least two opposite in-plane directions from a lens center ("O") 650 to opposite lens peripheries 655. For example, the orientations of the LC directors of LC molecules 612 located in close proximity to the surface of the birefringent medium layer 615 may exhibit a continuous rotation in at least two opposite in-plane directions (e.g., a plurality of opposite radial directions) from the lens center 650 to the opposite lens peripheries 655 with a varying pitch. The orientations of the LC directors from the lens center 650 to the opposite lens peripheries 655 may exhibit a rotation in a same rotation direction (e.g., clockwise, or counter-clockwise). A pitch A of the in-plane orientation pattern may be defined as a distance in the in-plane direction (e.g., a radial direction) over which the orientations of the LC directors (or azimuthal angles ϕ of the LC molecules 612) change by a predetermined angle (e.g., 180°) from a predetermined initial state.

As shown in the enlarged view in FIG. 6B, according to the LC director field along the x-axis direction, the pitch A may be a function of the distance from the lens center 650. The pitch A may monotonically decrease from the lens center 650 to the lens peripheries 655 in the at least two opposite in-plane directions (e.g., two opposite radial directions) in the x-y plane, e.g., Λ₀ > Λ₁ > ... > Λᵣ. Λ₀ is the pitch at a central region of the lens pattern, which may be the largest. The pitch Λᵣ is the pitch at a periphery region (e.g., periphery 655) of the lens pattern, which may be the smallest. In some examples, the azimuthal angle ϕ of the LC molecule 612 may change in proportional to the distance from the lens center 650 to a local point of the birefringent medium layer 615 at which the LC molecule 612 is located. In some examples, the in-plane orientation pattern of the orientations of the LC directors shown in FIGs. 6B and 6C may also be referred to as a lens pattern (e.g., a spherical lens pattern).

As shown in FIG. 6B, a lens pattern center (O_{L}) and a geometry center (O_{G}) (e.g., a center of lens aperture) of the LCPH element 600 functioning as on-axis focusing spherical lens may substantially overlap with one another, at the lens center ("O") 650. The lens pattern center (O_{L}) may be a center of the lens pattern of the LCPH element 600 functioning as on-axis focusing spherical lens, and may also be a symmetry center of the lens pattern. The geometry center (O_{G}) may be defined as a center of a shape of the effective light receiving area (i.e., an aperture) of the LCPH element 600 functioning as an on-axis focusing spherical lens.

FIG. 6C schematically illustrates an x-y sectional view of a portion of the LCPH element 600, showing a periodic in-plane orientation pattern of the orientations of the LC directors (indicated by arrows 688 in FIG. 6B) of the LC molecules 612 located in close proximity to the surface of the birefringent medium layer 615. The in-plane orientation pattern of the LC directors shown in FIG. 6C may also be referred to as a grating pattern. Accordingly, the LCPH element 600 may function as a polarization selective grating with zero optical power, e.g., a PVH grating or a PBP grating.

As shown in FIG. 6C, the LC molecules 612 located in close proximity to the surface of the birefringent medium layer 615 may be configured with orientations of LC directors continuously changing (e.g., rotating) in a predetermined direction (e.g., an x-axis direction) along the surface. The continuous rotation of orientations of the LC directors may form a periodic rotation pattern with a uniform (e.g., same) in-plane pitch Pᵢₙ. The predetermined direction may be any suitable direction along the surface of the birefringent medium layer 615. For illustrative purposes, FIG. 6C shows that the predetermined direction is the x-axis direction. The predetermined direction may be referred to as an in-plane direction, the pitch Pᵢₙ along the in-plane direction may be referred to as an in-plane pitch or a horizontal pitch. The in-plane pitch Pᵢₙ is defined as a distance along the in-plane direction (e.g., the x-axis direction) over which the orientations of the LC directors exhibit a rotation by a predetermined value (e.g., 180°).

In addition, the orientations of the directors of the LC molecules 612 located in close proximity to the surface of the birefringent medium layer 615 may exhibit a rotation in a predetermined rotation direction, e.g., a clockwise direction or a counter-clockwise direction. Accordingly, the rotation of the orientations of the directors of the LC molecules 612 located in close proximity to the surface of the birefringent medium layer 615 may exhibit a handedness, e.g., right handedness or left handedness. In the example shown in FIG. 6C, the orientations of the directors of the LC molecules 612 located in close proximity to the surface of the birefringent medium layer 615 may exhibit a rotation in a clockwise direction. Accordingly, the rotation of the orientations of the directors of the LC molecules 612 located in close proximity to the surface of the birefringent medium layer 615 may exhibit a left handedness.

Although not shown, in some examples, the orientations of the directors of the LC molecules 612 located in close proximity to the surface of the birefringent medium layer 615 may exhibit a rotation in a counter-clockwise direction. Accordingly, the rotation of the orientations of the directors of the LC molecules 612 located in close proximity to the surface of the birefringent medium layer 615 may exhibit a right handedness. Although not shown, in some examples, within the surface of the birefringent medium layer 615, domains in which the orientations of the directors of the LC molecules 612 exhibit a rotation in a clockwise direction (referred to as domains DL) and domains in which the orientations of the directors of the LC molecules 612 exhibit a rotation in a counter-clockwise direction (referred to as domains DR) may be alternatingly arranged in at least one in-plane direction, e.g., in x-axis and y-axis directions.

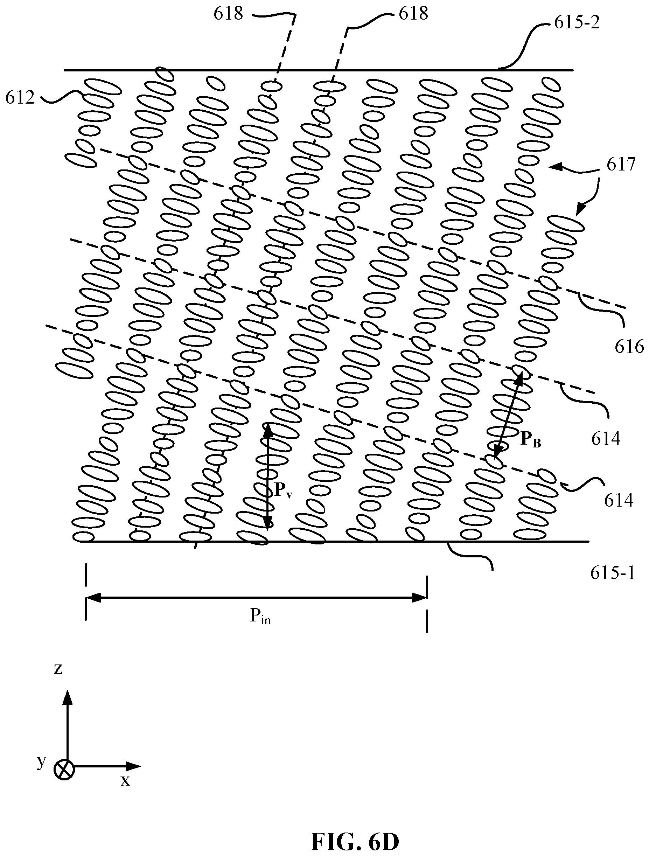

FIG. 6D schematically illustrates an y-z sectional views of a portion of the LCPH element 600, showing out-of-plane orientations of the LC directors of the LC molecules 612 in the LCPH element 600. In some examples, the out-of-plane direction may be in the thickness direction of the LCPH element 600. As shown in FIG. 6D, within a volume of the birefringent medium layer 615, the LC molecules 612 may be arranged in a plurality of helical structures 617 with a plurality of helical axes 618 and a helical pitch Pₕ along the helical axes 618. The azimuthal angles of the LC molecules 612 arranged along a single helical structure 617 may continuously vary around the helical axis 618 in a predetermined rotation direction, e.g., clockwise direction or counter-clockwise direction. In other words, the orientations of the LC directors of the LC molecules 612 arranged along a single helical structure 617 may exhibit a continuous rotation around the helical axis 618 in a predetermined rotation direction. That is, the azimuthal angles associated of the LC directors may exhibit a continuous change around the helical axis in the predetermined rotation direction. Accordingly, the helical structure 617 may exhibit a handedness, e.g., right handedness or left handedness. The helical pitch Pₕ may be defined as a distance along the helical axis 618 over which the orientations of the LC directors exhibit a rotation around the helical axis 618 by 360°, or the azimuthal angles of the LC molecules vary by 360°.

As shown in FIG. 6D, the helical axes 618 of the helical structures 617 may be tilted with respect to the first surface 615-1 and/or the second surface 615-2 of the birefringent medium layer 615 (or with respect to the thickness direction of the birefringent medium layer 615). For example, the helical axes 618 of the helical structures 617 may have an acute angle or obtuse angle with respect to the first surface 615-1 and/or the second surface 615-2 of the birefringent medium layer 615. In some examples, the LC directors of the LC molecule 612 may be substantially orthogonal to the helical axes 618 (i.e., the tilt angle may be substantially zero degree). In some examples, the LC directors of the LC molecule 612 may be tilted with respect to the helical axes 618 at an acute angle.

The birefringent medium layer 615 may also have a vertical periodicity (or pitch) Pᵥ which may be defined as a distance along the thickness direction of the birefringent medium layer 615 over which the orientations of the LC directors of the LC molecules 612 exhibit a rotation around the helical axis 618 by 180° (or the azimuthal angles of the LC directors vary by 180°).

The LC molecules 612 from the plurality of helical structures 617 having a first same orientation (e.g., same tilt angle and azimuthal angle) may form a first series of parallel refractive index planes 614 periodically distributed within the volume of the birefringent medium layer 615. Although not labeled, the LC molecules 612 with a second same orientation (e.g., same tilt angle and azimuthal angle) different from the first same orientation may form a second series of parallel refractive index planes periodically distributed within the volume of the birefringent medium layer 615. Different series of parallel refractive index planes may be formed by the LC molecules 612 having different orientations. In the same series of parallel and periodically distributed refractive index planes 614, the LC molecules 612 may have the same orientation and the refractive index may be the same. Different series of refractive index planes 614 may correspond to different refractive indices. When the number of the refractive index planes 614 (or the thickness of the birefringent medium layer) increases to a sufficient value, Bragg diffraction may be established according to the principles of volume gratings. Thus, the periodically distributed refractive index planes 614 may also be referred to as Bragg planes 614. The refractive index planes 614 may be slanted with respect to the first surface 615-1 or the second surface 615-2. Within the birefringent medium layer 615, there may exist different series of Bragg planes. A distance (or a period) between adjacent Bragg planes 614 of the same series may be referred to as a Bragg period P_{B}. The different series of Bragg planes formed within the volume of the birefringent medium layer 615 may produce a varying refractive index profile that is periodically distributed in the volume of the birefringent medium layer 615. The birefringent medium layer 615 may diffract an input light satisfying a Bragg condition through Bragg diffraction.

The birefringent medium layer 615 may also include a plurality of LC molecule director planes (or molecule director planes) 616 arranged in parallel with one another within the volume of the birefringent medium layer 615. An LC molecule director plane (or an LC director plane) 616 may be a plane formed by or including the LC directors of the LC molecules 612. In the example shown in FIG. 6D, an angle θ (not shown) between the LC director plane 616 and the Bragg plane 614 may be substantially 0° or 180°. That is, the LC director plane 616 may be substantially parallel with the Bragg plane 614.

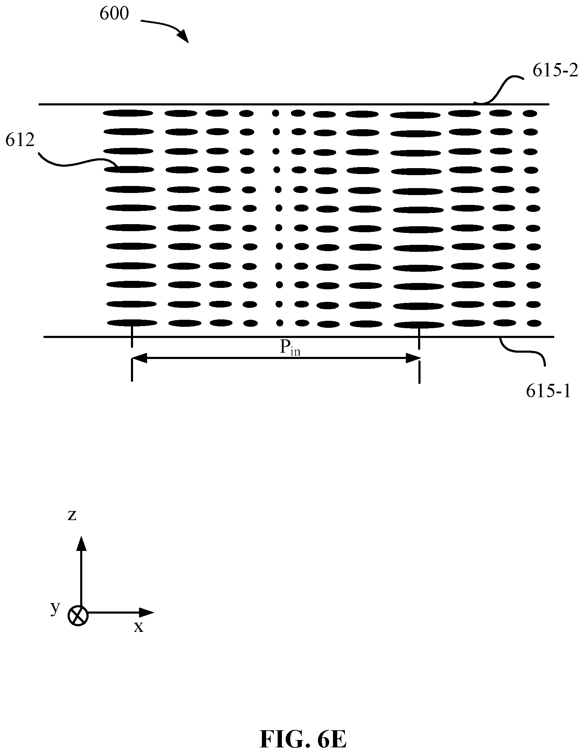

In the example shown in FIG. 6E, in a volume of the birefringent medium layer 615, along the thickness direction (e.g., the z-axis direction) of the birefringent medium layer 615, the directors (or the azimuth angles) of the LC molecules 612 may remain in the same orientation (or same angle value) from the first surface 615-1 to the second surface 615-2 of the birefringent medium layer 615. In some examples, the thickness of the birefringent medium layer 615 may be configured as d=λ(2*Δn), where λ is a design wavelength, Δn is the birefringence of the LC material of the birefringent medium layer 615, and Δn =nₑ-nₒ, where nₑ and nₒ are the extraordinary and ordinary refractive indices of the LC material, respectively.

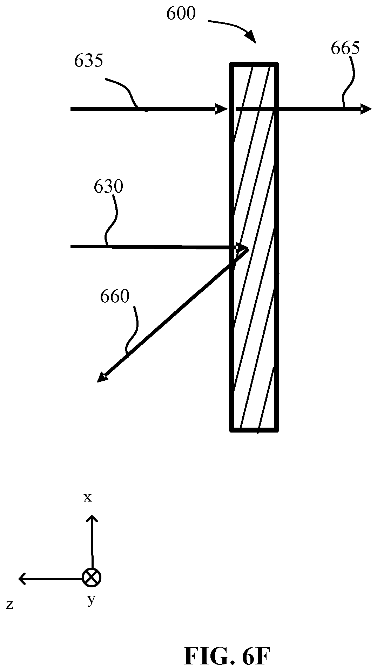

FIG. 6F schematically illustrates polarization selective diffraction and transmission of the LCPH element 600 shown in FIG. 6A. The LCPH element 600 may have the in-plane orientations of the LC directors of the LC molecules 612 shown in FIG. 6B and the out-of-plane orientations of the LC directors of the LC molecules 612 shown in FIG. 6D. The LCPH element 600 may function as a reflective PVH lens (also referred to as 600 for discussion purpose). The reflective PVH lens 600 may be configured to substantially backwardly diffract a circularly polarized beam or an elliptically polarized beam having a first handedness (e.g., a handedness that is the same as the handedness of the helical structure shown in FIG. 6D) as a diffracted beam (e.g., the 1^{st} diffracted beam), and substantially transmit (e.g., with negligible or zero diffraction) a circularly polarized beam having a second handedness that is opposite to the first handedness as a transmitted beam. In some examples, the reflective PVH lens 600 may be configured to substantially maintain the handedness of the circularly polarized beam diffracted thereby and the handedness of the circularly polarized beam transmitted thereby. For example, the diffracted beam may be a circularly polarized beam with the first handedness, and the transmitted beam may be a circularly polarized beam with the second handedness substantially. For discussion purposes, FIG. 6E shows that the reflective PVH lens 600 is a right-handed reflective PVH, which is configured to substantially reflect and converge, via diffraction, an RHCP beam 630 as an RHCP beam 660, and substantially transmit (e.g., with negligible diffraction) an LHCP beam 635 as an LHCP beam 665. In some examples, the reflective PVH lens 600 may be a left-handed reflective PVH, which is configured to substantially reflect and converge, via diffraction, an LHCP beam as an LHCP beam, and substantially transmit (e.g., with negligible diffraction) an RHCP beam as an RHCP beam.

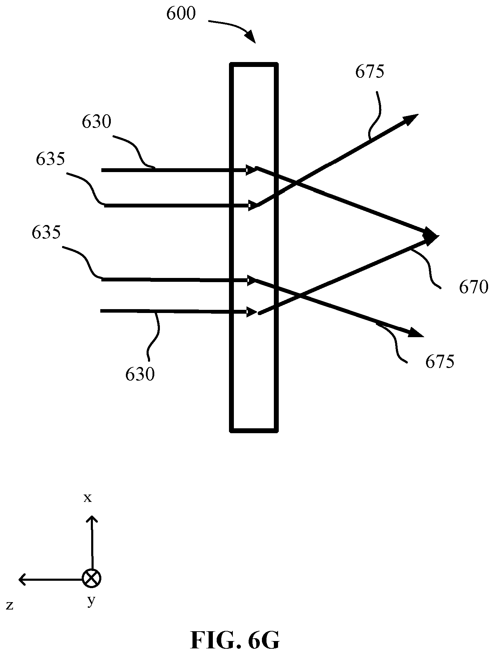

FIG. 6G schematically illustrates polarization selective diffraction and transmission of the LCPH element 600 shown in FIG. 6A. The LCPH element 600 may have the in-plane orientations of the LC directors of the LC molecules 612 shown in FIG. 6B and the out-of-plane orientations of the LC directors of the LC molecules 612 shown in FIG. 6E. The LCPH element 600 may function as a PBP lens (also referred to as 600 for discussion purpose). The PBP lens 600 may be configured to converge a circularly polarized beam or an elliptically polarized beam having a first handedness (e.g., a handedness that is the same as the handedness of the rotation of the orientations of the directors of the LC molecules 612 located in close proximity to the surface of the birefringent medium layer 615 shown in FIG. 6B), and diverge a circularly polarized beam or an elliptically polarized beam having a second handedness that is opposite to the first handedness. In some examples, the PBP lens 600 may be configured to reverse the handedness of the circularly polarized beam while converging or diverging the circularly polarized beam. For discussion purposes, FIG. 6G shows that the PBP lens 600 is configured to substantially converge the RHCP beam 630 as an LHCP beam 670, and diverge the LHCP beam 635 as an LHCP beam 675.

In some examples, the present disclosure provides a device. The device includes a display element and a lens assembly. The lens assembly includes a polarization non-selective partial reflector, a polarization selective reflector and a polarization switch disposed at opposite sides of the polarization non-selective partial reflector, and a polarization selective transmissive lens disposed between the polarization switch and the polarization non-selective partial reflector. The device also includes a controller configured to: during a first sub-frame of a display frame, control the display element to display a first virtual sub-image including content of a first portion of a virtual image, and control the polarization switch to operate in a switching state. The controller is also configured to: during a second sub-frame of the display frame, control the display element to display a second virtual sub-image including content of a second portion of the virtual image, and control the polarization switch to operate in a non-switching state.

In some examples, the controller is further configured to retrieve image data of the virtual image, and partition the image data into a first image data portion representing the content of the first portion of the virtual image and a second image data portion representing the content of the second portion of the virtual image.

In some examples, the polarization selective reflector includes a reflective polarization hologram volume element or a cholesteric liquid crystal element. In some examples, the polarization selective transmissive lens includes a Pancharatnam-Berry Phase lens. In some examples, the polarization switch includes a switchable half-wave plate.

In some examples, the controller is configured to control the lens assembly to form, at a predetermined image plane, a first magnified image of the display element that displays the first virtual sub-image during the first sub-frame, and form, at the predetermined image plane, a second magnified image of the display element that displays the second virtual sub-image during the second sub-frame. The first magnified image has a first magnification and the second magnified image has a second magnification that is different from the first magnification. A superimposed magnified image formed at the predetermined image plane during the display frame is a combination of the first magnified image formed during the first sub-frame and the second magnified image formed during the second sub-frame.

In some examples, the first portion of the virtual image is a periphery portion of the virtual image, and the second portion of the virtual image is a foveal portion of the virtual image surrounded by the periphery portion.

In some examples, the first magnification of the first magnified image is greater than the second magnification of the second magnified image.

In some examples, the controller is configured to control the display element to output a first image light representing content of the periphery portion of the virtual image and a second image light representing content of the foveal portion of the virtual image. The controller is configured to control the lens assembly to provide a first optical power to the first image light propagating from the display element to the eye-box region, and a second optical power to the second image light propagating from the display element to the eye-box region, the first optical power being greater than the second optical power.

In some examples, the controller is configured to control the polarization switch of the lens assembly during the first sub-frame and the second sub-frame to provide a first optical path to the first image light propagating from the display element to the eye-box region during the first sub-frame, and a second optical path to the second image light propagating from the display element to the eye-box region during the second sub-frame, the first optical path being shorter than the second optical path.

In some examples, the controller is configured to: control the display element to switch between displaying the first virtual sub-image and displaying the second virtual sub-image at a predetermined frequency, and control the polarization switch to switch between operating in the switching state and operating in the non-switching state at the predetermined frequency. In some examples, the predetermined frequency is at least 60 Hz.

In some examples, the polarization selective reflector is configured to transmit a light having a first polarization, and reflect a light having a second polarization that is orthogonal to the first polarization. The first polarization and the second polarization are circular polarizations having opposite handednesses.

In some examples, the polarization selective transmissive lens is configured to converge a light having the first polarization and diverge a light having the second polarization. In some examples, the polarization selective transmissive lens is a first transmissive lens, the lens assembly further includes: a second transmissive lens, the first transmissive lens and the second transmissive lens being disposed at opposite sides of the polarization switch, and a polarizer disposed between the first transmissive lens and the second transmissive lens.

In some examples, the polarizer is configured to transmit a light having one of the second polarization and the first polarization, and block a light having the other one of the second polarization and the first polarization.

In some examples, during the first sub-frame: the controller is configured to control the display element to output a first image light forming the first virtual sub-image toward the polarization selective reflector; the polarization selective reflector is configured to transmit the first image light having the first polarization toward the polarization non-selective partial reflector; the polarization non-selective partial reflector is configured to transmit a first portion of the first image light toward the first transmissive lens; the first transmissive lens is configured to converge the first portion of the first image light toward the polarization switch as a second image light having the second polarization; the controller is configured to control the polarization switch to operate in the switching state to convert the second image light into a third image light having the first polarization toward the polarizer; the polarizer is configured to transmit the third image light toward the second transmissive lens; and the second transmissive lens is configured to converge the third image light.

In some examples, during the second sub-frame: the controller is configured to control the display element to output a fourth image light forming the second virtual sub-image toward the polarization selective reflector; the polarization selective reflector is configured to transmit the fourth image light having the first polarization toward the polarization non-selective partial reflector; the polarization non-selective partial reflector is configured to reflect a portion of the fourth image light back to the polarization selective reflector as a fifth image light having the second polarization; the polarization selective reflector is configured to reflect the fifth image back to the polarization non-selective partial reflector as a sixth image light having the second polarization; the polarization non-selective partial reflector is configured to transmit a portion of the sixth image light toward the first transmissive lens; the first transmissive lens is configured to diverge the portion of the sixth image light toward the polarization switch as a seventh image light having the first polarization; the controller is configured to control the polarization switch to operate in the non-switching state to transmit the seventh image light toward the polarizer; the polarizer is configured to transmit the seventh image light toward the second transmissive lens; and the second transmissive lens is configured to converge the seventh image light.

In some examples, the present disclosure provides a method. The method include during a first sub-frame of a display frame, controlling, by a controller, a display element to display a first virtual sub-image including content of a first portion of a virtual image; and controlling, by the controller, a polarization switch included in a lens assembly to operate in a switching state, the lens assembly including a polarization non-selective partial reflector, a polarization selective reflector and the polarization switch disposed at opposites sides of the polarization non-selective partial reflector, and a polarization selective transmissive lens disposed between the polarization switch and the polarization non-selective partial reflector. The method also includes, during a second sub-frame of the display frame, controlling, by the controller, the display element to display a second virtual sub-image including content of a second portion of the virtual image; and controlling, by the controller, the polarization switch to operate in a non-switching state.

In some examples, the method also includes retrieving, by the controller, image data of the virtual image; and partitioning, by the controller, the image data into a first image data portion representing the content of the first portion of the virtual image and a second image data portion representing the content of the second portion of the virtual image.

In some examples, the method also includes during the first sub-frame, forming, by the lens assembly, at a predetermined image plane, a first magnified image of the display element displaying the first virtual sub-image; and during the second sub-frame, forming, by the lens assembly, at the predetermined image plane, a second magnified image of the display element displaying the second virtual sub-image. A superimposed magnified image formed at the predetermined image plane during the display frame is a combination of the first magnified image formed during the first sub-frame and the second magnified image formed during the second sub-frame. The first magnified image has a first magnification and the second magnified image has a second magnification that is different from the first magnification.

In some examples, the first portion of the virtual image is a periphery portion of the virtual image, and the second portion of the virtual image is a foveal portion of the virtual image surrounded by the periphery portion. In some examples, the first magnification of the first magnified image is smaller than the second magnification of the second magnified image.

In some examples, the method also includes: controlling, by the controller, the display element to switch between displaying the first virtual sub-image and displaying the second virtual sub-image at a predetermined frequency; and controlling, by the controller, the polarization switch to switch between operating in the switching state and operating in the non-switching state at the predetermined frequency. The predetermined frequency is at least 60 Hz.

The foregoing description of the examples of the present disclosure have been presented for the purpose of illustration. It is not intended to be exhaustive or to limit the disclosure to the precise forms disclosed. Persons skilled in the relevant art can appreciate that modifications and variations are possible in light of the above disclosure.

Some portions of this description may describe the embodiments of the present disclosure in terms of algorithms and symbolic representations of operations on information. These operations, while described functionally, computationally, or logically, may be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware and/or software modules, alone or in combination with other devices. In one embodiment, a software module is implemented with a computer program product including a computer-readable medium containing computer program code, which can be executed by a computer processor for performing any or all of the steps, operations, or processes described. In some embodiments, a hardware module may include hardware components such as a device, a system, an optical element, a controller, an electrical circuit, a logic gate, etc.

Embodiments of the present disclosure may also relate to an apparatus for performing the operations herein. This apparatus may be specially constructed for the specific purposes, and/or it may include a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. The non-transitory computer-readable storage medium can be a suitable medium that can store program codes, for example, a magnetic disk, an optical disk, a read-only memory ("ROM"), or a random access memory ("RAM"), an Electrically Programmable read only memory ("EPROM"), an Electrically Erasable Programmable read only memory ("EEPROM"), a register, a hard disk, a solid-state disk drive, a smart media card ("SMC"), a secure digital card ("SD"), a flash card, etc. Furthermore, computing systems described in the specification may include a single processor or may be architectures employing multiple processors for increased computing capability. The processor may be a central processing unit ("CPU"), a graphics processing unit ("GPU"), or another suitable processing device configured to process data and/or performing computation based on data. The processor may include both software and hardware components. For example, the processor may include a hardware component, such as an application-specific integrated circuit ("ASIC"), a programmable logic device ("PLD"), or a combination thereof. The PLD may be a complex programmable logic device ("CPLD"), a field-programmable gate array ("FPGA"), etc.

Embodiments of the present disclosure may also relate to a product that is produced by a computing process described herein. Such a product may include information resulting from a computing process, where the information is stored on a non-transitory, tangible computer readable storage medium and may include any embodiment of a computer program product or other data combination described herein.

Further, when an embodiment illustrated in a drawing shows a single element, it is understood that the embodiment or an embodiment not shown in the figures but within the scope of the present disclosure may include a plurality of such elements. Likewise, when an embodiment illustrated in a drawing shows a plurality of such elements, it is understood that the embodiment or an embodiment not shown in the figures but within the scope of the present disclosure may include only one such element. The number of elements illustrated in the drawing is for illustration purposes only, and should not be construed as limiting the scope of the embodiment. Moreover, unless otherwise noted, the embodiments shown in the drawings are not mutually exclusive, and they may be combined in a suitable manner. For example, elements shown in one figure/embodiment but not shown in another figure/embodiment may nevertheless be included in the other figure/embodiment. In an optical device disclosed herein including one or more optical layers, films, plates, or elements, the numbers of the layers, films, plates, or elements shown in the figures are for illustrative purposes only. In other embodiments not shown in the figures, which are still within the scope of the present disclosure, the same or different layers, films, plates, or elements shown in the same or different figures/embodiments may be combined or repeated in various manners to form a stack.

Various embodiments have been described to illustrate the exemplary implementations. Based on the disclosed embodiments, a person having ordinary skills in the art may make various other changes, modifications, rearrangements, and substitutions without departing from the scope of the present disclosure. Thus, while the present disclosure has been described in detail with reference to the above embodiments, the present disclosure is not limited to the above described embodiments. The present disclosure may be embodied in other equivalent forms without departing from the scope of the present disclosure. The scope of the present disclosure is defined in the appended claims.

## Claims

1. A device, comprising:
a display element (104);
a lens assembly configured to provide two different optical paths to image lights output from the display element toward an eye-box region of the device, the lens assembly comprising:
a polarization non-selective partial reflector (137);
a polarization selective reflector (115) and a polarization switch (129) disposed at opposite sides of the polarization non-selective partial reflector;
a polarization selective transmissive lens (125) disposed between the polarization switch and the polarization non-selective partial reflector; and
a polarizer (123) disposed between the polarization switch and the eye-box region; and
a controller configured to:
during a first sub-frame of a display frame, control the display element to display a first virtual sub-image including content of a first portion of a virtual image, and control the polarization switch to operate in a switching state, and
during a second sub-frame of the display frame, control the display element to display a second virtual sub-image including content of a second portion of the virtual image, and control the polarization switch to operate in a non-switching state, wherein the polarization selective reflector (115) is between the polarization non-selective partial reflector (137) and the display element (104).

2. The device of claim 1, wherein the controller is further configured to retrieve image data of the virtual image, and partition the image data into a first image data portion representing the content of the first portion of the virtual image and a second image data portion representing the content of the second portion of the virtual image.

3. The device of claim 1 or 2, wherein the polarization selective reflector includes a reflective polarization volume hologram element or a cholesteric liquid crystal element.

4. The device of any preceding claim, wherein the polarization selective transmissive lens includes a Pancharatnam-Berry Phase lens.

5. The device of any preceding claim, wherein the polarization switch includes a switchable half-wave plate.

6. The device of any preceding claim, wherein:
the controller is configured to control the lens assembly to form, at a predetermined image plane, a first magnified image of the display element that displays the first virtual sub-image during the first sub-frame, and form, at the predetermined image plane, a second magnified image of the display element that displays the second virtual sub-image during the second sub-frame,
the first magnified image has a first magnification and the second magnified image has a second magnification that is different from the first magnification, and
a superimposed magnified image formed at the predetermined image plane during the display frame is a combination of the first magnified image formed during the first sub-frame and the second magnified image formed during the second sub-frame.

7. The device of claim 6, wherein the first portion of the virtual image is a periphery portion of the virtual image, and the second portion of the virtual image is a foveal portion of the virtual image surrounded by the periphery portion.

8. The device of claim 7, wherein the first magnification of the first magnified image is greater than the second magnification of the second magnified image.

9. The device of claim 7 or 8, wherein:
the controller is configured to control the display element to output a first image light representing content of the periphery portion of the virtual image and a second image light representing content of the foveal portion of the virtual image, and
the controller is configured to control the lens assembly to provide a first optical power to the first image light propagating from the display element to the eye-box region, and provide a second optical power to the second image light propagating from the display element to the eye-box region, the first optical power being greater than the second optical power;
preferably wherein the controller is configured to control the polarization switch of the lens assembly during the first sub-frame and the second sub-frame to provide a first optical path to the first image light propagating from the display element to the eye-box region during the first sub-frame, and provide a second optical path to the second image light propagating from the display element to the eye-box region during the second sub-frame, the first optical path being shorter than the second optical path.

10. The device of any preceding claim, wherein the controller is configured to:
control the display element to switch between displaying the first virtual sub-image and displaying the second virtual sub-image at a predetermined frequency, and
control the polarization switch to switch between operating in the switching state and operating in the non-switching state at the predetermined frequency;
preferably wherein the predetermined frequency is at least 60 Hz.

11. The device of any preceding claim, wherein:
the polarization selective reflector is configured to transmit a light having a first polarization, and reflect a light having a second polarization that is orthogonal to the first polarization, and
the first polarization and the second polarization are circular polarizations having opposite handednesses;
preferably wherein the polarization selective transmissive lens is configured to converge a light having the first polarization and diverge a light having the second polarization.

12. A method, comprising:
during a first sub-frame of a display frame,
controlling, by a controller, a display element to display a first virtual sub-image including content of a first portion of a virtual image; and
controlling, by the controller, a polarization switch included in a lens assembly to operate in a switching state, the lens assembly including a polarization non-selective partial reflector, a polarization selective reflector and the polarization switch disposed at opposites sides of the polarization non-selective partial reflector, a polarization selective transmissive lens disposed between the polarization switch and the polarization non-selective partial reflector, and a polarizer disposed between the polarization switch and an eye-box region; and
during a second sub-frame of the display frame,
controlling, by the controller, the display element to display a second virtual sub-image including content of a second portion of the virtual image; and
controlling, by the controller, the polarization switch to operate in a non-switching state;
wherein the lens assembly is configured to provide two different optical paths to image lights output from the display element toward the eye-box region.

13. The method of claim 12, further comprising:
retrieving, by the controller, image data of the virtual image; and
partitioning, by the controller, the image data into a first image data portion representing the content of the first portion of the virtual image and a second image data portion representing the content of the second portion of the virtual image.

14. The method of claim 12 or 13, further comprising:
during the first sub-frame, forming, by the lens assembly, at a predetermined image plane, a first magnified image of the display element displaying the first virtual sub-image; and
during the second sub-frame, forming, by the lens assembly, at the predetermined image plane, a second magnified image of the display element displaying the second virtual sub-image,
wherein a superimposed magnified image formed at the predetermined image plane during the display frame is a combination of the first magnified image formed during the first sub-frame and the second magnified image formed during the second sub-frame, and
wherein the first magnified image has a first magnification and the second magnified image has a second magnification that is different from the first magnification;
preferably wherein the first portion of the virtual image is a periphery portion of the virtual image, and the second portion of the virtual image is a foveal portion of the virtual image surrounded by the periphery portion;
further preferably wherein the first magnification of the first magnified image is smaller than the second magnification of the second magnified image.

15. The method of any of claims 12 to 14, further comprising:
controlling, by the controller, the display element to switch between displaying the first virtual sub-image and displaying the second virtual sub-image at a predetermined frequency; and
controlling, by the controller, the polarization switch to switch between operating in the switching state and operating in the non-switching state at the predetermined frequency,
wherein the predetermined frequency is at least 60 Hz.

## Patentansprüche

1. Eine Vorrichtung, die Folgendes beinhaltet:
ein Anzeigeelement (104);
eine Linseneinrichtung, die konfiguriert ist, um zwei unterschiedliche optische Wege für Bildlichter, die aus dem Anzeigeelement in Richtung einer Eyeboxregion der Vorrichtung ausgegeben werden, bereitzustellen, wobei die Linsenanordnung Folgendes beinhaltet:
einen nichtpolarisationsselektiven Teilreflektor (137);
einen polarisationsselektiven Reflektor (115) und einen Polarisationsschalter (129), die auf gegenüberliegenden Seiten des nichtpolarisationsselektiven Teilreflektors angeordnet sind;
eine polarisationsselektive lichtdurchlässige Linse (125), die zwischen dem Polarisationsschalter und dem nichtpolarisationsselektiven Teilreflektor angeordnet ist; und
einen Polarisator (123), der zwischen dem Polarisationsschalter und der Eyeboxregion angeordnet ist; und
eine Steuereinheit, die für Folgendes konfiguriert ist:
während eines ersten Teilframes eines Anzeigeframes, Steuern des Anzeigeelements, um ein erstes virtuelles Teilbild anzuzeigen, das Inhalt eines ersten Teils eines virtuellen Bilds umfasst, und Steuern des Polarisationsschalters, um in einem Schaltzustand zu arbeiten, und während eines zweiten Teilframes des Anzeigeframes, Steuern des Anzeigeelements, um ein zweites virtuelles Teilbild anzuzeigen, das Inhalt eines zweiten Teils des virtuellen Bilds umfasst, und Steuern des Polarisationsschalters, um in einem Nichtschaltzustand zu arbeiten, wobei der polarisationsselektive Reflektor (115) zwischen dem nichtpolarisationsselektiven Teilreflektor (137) und dem Anzeigeelement (104) liegt.

2. Vorrichtung gemäß Anspruch 1, wobei die Steuereinheit ferner konfiguriert ist, um Bilddaten des virtuellen Bilds abzufragen und die Bilddaten in einen ersten Bilddatenteil, der den Inhalt des ersten Teils des virtuellen Bilds darstellt, und einen zweiten Bilddatenteil, der den Inhalt des zweiten Teils des virtuellen Bilds darstellt, zu teilen.

3. Vorrichtung gemäß Anspruch 1 oder 2, wobei der polarisationsselektive Reflektor ein reflektierendes Polarisationsvolumenhologrammelement oder ein cholesterisches Flüssigkristallelement umfasst.

4. Vorrichtung gemäß einem der vorhergehenden Ansprüche, wobei die polarisationsselektive lichtdurchlässige Linse eine Pancharatnam-Berry-Phasenlinse umfasst.

5. Vorrichtung gemäß einem der vorhergehenden Ansprüche, wobei der Polarisationsschalter ein schaltbares Halbwellenlängenplättchen umfasst.

6. Vorrichtung gemäß einem der vorhergehenden Ansprüche, wobei:
die Steuereinheit konfiguriert ist, um die Linseneinrichtung zu steuern, um in einer vorbestimmten Bildebene ein erstes vergrößertes Bild des Anzeigeelements zu bilden, das das erste virtuelle Teilbild während des ersten Teilframes anzeigt, und in der vorbestimmten Bildebene ein zweites vergrößertes Bild des Anzeigeelements zu bilden, das das zweite virtuelle Teilbild während des zweiten Teilframes anzeigt, das erste vergrößerte Bild eine erste Vergrößerung aufweist und das zweite vergrößerte Bild eine zweite Vergrößerung, die sich von der ersten Vergrößerung unterscheidet, aufweist, und
ein überlagertes vergrößertes Bild, das in der vorbestimmten Ebene während des Anzeigeframes gebildet wird, eine Kombination aus dem ersten vergrößerten Bild, das während des ersten Teilframes gebildet wird, und dem zweiten vergrößerten Bild, das während des zweiten Teilframes gebildet wird, ist.

7. Vorrichtung gemäß Anspruch 6, wobei der erste Teil des virtuellen Bilds ein Peripherieteil des virtuellen Bilds ist und der zweite Teil des virtuellen Bilds ein fovealer Teil des virtuellen Bilds, der von dem Peripherieteil umgeben ist, ist.

8. Vorrichtung gemäß Anspruch 7, wobei die erste Vergrößerung des ersten vergrößerten Bilds größer als die zweite Vergrößerung des zweiten vergrößerten Bilds ist.

9. Vorrichtung gemäß Anspruch 7 oder 8, wobei:
die Steuereinheit konfiguriert ist, um das Anzeigeelement zu steuern, um ein erstes Bildlicht, das Inhalt des Peripherieteils des virtuellen Bilds darstellt, und ein zweites Bildlicht, das Inhalt des fovealen Teils des virtuellen Bilds darstellt, auszugeben, und die Steuereinheit konfiguriert ist, um die Linseneinrichtung zu steuern, um eine erste optische Leistung dem ersten Bildlicht, das sich aus dem Anzeigeelement zu der Eyeboxregion ausbreitet, bereitzustellen und eine zweite optische Leistung dem zweiten Bildlicht, das sich aus dem Anzeigeelement zu der Eyeboxregion ausbreitet, bereitzustellen, wobei die erste optische Leistung größer als die zweite optische Leistung ist;
wobei die Steuereinheit vorzugsweise konfiguriert ist, um den Polarisationsschalter der Linseneinrichtung während des ersten Teilframes und des zweiten Teilframes zu steuern, um während des ersten Teilframes dem ersten Bildlicht, das sich aus dem Anzeigeelement zu der Eyeboxregion ausbreitet, einen ersten optischen Weg bereitzustellen und während des zweiten Teilframes dem zweiten Bildlicht, das sich aus dem Anzeigeelement zu der Eyeboxregion ausbreitet, einen zweiten optischen Weg bereitzustellen, wobei der erste optische Weg kürzer als der zweite optische Weg ist.

10. Vorrichtung gemäß einem der vorhergehenden Ansprüche, wobei die Steuereinheit für Folgendes konfiguriert ist:
Steuern des Anzeigeelements, um zwischen dem Anzeigen des ersten virtuellen Teilbilds und dem Anzeigen des zweiten virtuellen Teilbilds mit einer vorbestimmten Frequenz zu schalten, und
Steuern des Polarisationsschalters, um zwischen dem Arbeiten in dem Schaltzustand und dem Arbeiten in dem Nichtschaltzustand mit der vorbestimmten Frequenz zu schalten;
wobei die vorbestimmte Frequenz vorzugsweise mindestens 60 Hz ist.

11. Vorrichtung gemäß einem der vorhergehenden Ansprüche, wobei:
der polarisationsselektive Reflektor konfiguriert ist, um ein Licht durchzulassen, das eine erste Polarisation aufweist, und ein Licht zu reflektieren, das eine zweite Polarisation aufweist, die orthogonal zu der ersten Polarisation ist, und
die erste Polarisation und die zweite Polarisation Zirkularpolarisationen sind, die entgegengesetzte Händigkeiten aufweisen;
wobei die polarisationsselektive lichtdurchlässige Linse vorzugsweise konfiguriert ist, um ein Licht, das die erste Polarisation aufweist, zu konvergieren und ein Licht, das die zweite Polarisation aufweist, zu divergieren.

12. Ein Verfahren, das Folgendes beinhaltet:
während eines ersten Teilframes eines Anzeigeframes,
Steuern, durch eine Steuereinheit, eines Anzeigeelements, um ein erstes virtuelles Teilbild anzuzeigen, das Inhalt eines ersten Teils eines virtuellen Bilds umfasst; und
Steuern, durch die Steuereinheit, eines Polarisationsschalters, der in einer Linseneinrichtung umfasst ist, um in einem Schaltzustand zu arbeiten, wobei die Linseneinrichtung einen nichtpolarisationsselektiven Teilreflektor, einen polarisationsselektiven Reflektor und den Polarisationsschalter, die auf gegenüberliegenden Seiten des nichtpolarisationsselektiven Teilreflektors angeordnet sind, eine polarisationsselektive lichtdurchlässige Linse, die zwischen dem Polarisationsschalter und dem nichtpolarisationsselektiven Teilreflektor angeordnet ist, und einen Polarisator, der zwischen dem Polarisationsschalter und einer Eyeboxregion angeordnet ist, umfasst; und
während eines zweiten Teilframes des Anzeigeframes,
Steuern, durch die Steuereinheit, des Anzeigeelements, um ein zweites virtuelles Teilbild anzuzeigen, das Inhalt eines zweiten Teils des virtuellen Bilds umfasst; und
Steuern, durch die Steuereinheit, des Polarisationsschalters, um in einem Nichtschaltzustand zu arbeiten;
wobei die Linseneinrichtung konfiguriert ist, um zwei unterschiedliche optische Wege für Bildlichter, die aus dem Anzeigeelement in Richtung der Eyeboxregion ausgegeben werden, bereitzustellen.

13. Verfahren gemäß Anspruch 12, das ferner Folgendes beinhaltet:
Abfragen, durch die Steuereinheit, von Bilddaten des virtuellen Bilds; und
Teilen, durch die Steuereinheit, der Bilddaten in einen ersten Bilddatenteil, der den Inhalt des ersten Teils des virtuellen Bilds darstellt, und einen zweiten Bilddatenteil, der den Inhalt des zweiten Teils des virtuellen Bilds darstellt.

14. Verfahren gemäß Anspruch 12 oder 13, das ferner Folgendes beinhaltet:
während des ersten Teilframes, Bilden, durch die Linseneinrichtung, in einer vorbestimmten Bildebene, eines ersten vergrößerten Bilds des Anzeigeelements, das das erste virtuelle Teilbild anzeigt; und
während des zweiten Teilframes, Bilden, durch die Linseneinrichtung, in der vorbestimmten Bildebene, eines zweiten vergrößerten Bilds des Anzeigeelements, das das zweite virtuelle Teilbild anzeigt,
wobei ein überlagertes vergrößertes Bild, das in der vorbestimmten Bildebene während des Anzeigeframes gebildet wird, eine Kombination aus dem ersten vergrößerten Bild, das während des ersten Teilframes gebildet wird, und dem zweiten vergrößerten Bild, das während des zweiten Teilframes gebildet wird, ist, und
wobei das erste vergrößerte Bild eine erste Vergrößerung aufweist und das zweite vergrößerte Bild eine zweite Vergrößerung, die sich von der ersten Vergrößerung unterscheidet, aufweist;
wobei der erste Teil des virtuellen Bilds vorzugsweise ein Peripherieteil des virtuellen Bilds ist und der zweite Teil des virtuellen Bilds ein fovealer Teil des virtuellen Bilds, der von dem Peripherieteil umgeben ist, ist;
wobei die erste Vergrößerung des ersten vergrößerten Bilds ferner vorzugsweise kleiner als die zweite Vergrößerung des zweiten vergrößerten Bilds ist.

15. Verfahren gemäß einem der Ansprüche 12 bis 14, das ferner Folgendes beinhaltet:
Steuern, durch die Steuereinheit, des Anzeigeelements, um zwischen dem Anzeigen des ersten virtuellen Teilbilds und dem Anzeigen des zweiten virtuellen Teilbilds mit einer vorbestimmten Frequenz zu schalten; und
Steuern, durch die Steuereinheit, des Polarisationsschalters, um zwischen dem Arbeiten in dem Schaltzustand und dem Arbeiten in dem Nichtschaltzustand mit der vorbestimmten Frequenz zu schalten,
wobei die vorbestimmte Frequenz mindestens 60 Hz ist.

## Revendications

1. Un dispositif, comprenant :
un élément d'affichage (104) ;
un ensemble lentille configuré pour fournir deux chemins optiques différents à des lumières d'image émises par l'élément d'affichage vers une région oculaire (*eye-box*) du dispositif, l'ensemble lentille comprenant :
un réflecteur partiel non sélectif en polarisation (137) ;
un réflecteur sélectif en polarisation (115) et un commutateur de polarisation (129) disposés au niveau de côtés opposés du réflecteur partiel non sélectif en polarisation ;
une lentille transmissive sélective en polarisation (125) disposée entre le commutateur de polarisation et le réflecteur partiel non sélectif en polarisation ; et un polariseur (123) disposé entre le commutateur de polarisation et la région oculaire ; et
un contrôleur configuré pour :
durant un premier sous-intervalle d'un intervalle d'affichage, commander l'élément d'affichage afin d'afficher une première sous-image virtuelle incluant du contenu d'une première portion d'une image virtuelle, et commander le commutateur de polarisation afin de fonctionner dans un état de commutation, et durant un deuxième sous-intervalle de l'intervalle d'affichage, commander l'élément d'affichage afin d'afficher une deuxième sous-image virtuelle incluant du contenu d'une deuxième portion de l'image virtuelle, et commander le commutateur de polarisation afin de fonctionner dans un état de non-commutation, le réflecteur sélectif en polarisation (115) se trouvant entre le réflecteur partiel non sélectif en polarisation (137) et l'élément d'affichage (104).

2. Le dispositif de la revendication 1, dans lequel le contrôleur est en outre configuré pour récupérer des données d'image de l'image virtuelle, et partitionner les données d'image en une première portion de données d'image représentant le contenu de la première portion de l'image virtuelle et une deuxième portion de données d'image représentant le contenu de la deuxième portion de l'image virtuelle.

3. Le dispositif de la revendication 1 ou de la revendication 2, dans lequel le réflecteur sélectif en polarisation inclut un élément hologramme volumique à polarisation en réflexion ou un élément cristal liquide cholestérique.

4. Le dispositif de n'importe quelle revendication précédente, dans lequel la lentille transmissive sélective en polarisation inclut une lentille à phase de Pancharatnam-Berry.

5. Le dispositif de n'importe quelle revendication précédente, dans lequel le commutateur de polarisation inclut une lame demi-onde commutable.

6. Le dispositif de n'importe quelle revendication précédente, dans lequel :
le contrôleur est configuré pour commander l'ensemble lentille afin de former, au niveau d'un plan image prédéterminé, une première image agrandie de l'élément d'affichage qui affiche la première sous-image virtuelle durant le premier sous-intervalle, et de former, au niveau du plan image prédéterminé, une deuxième image agrandie de l'élément d'affichage qui affiche la deuxième sous-image virtuelle durant le deuxième sous-intervalle,
la première image agrandie a un premier grandissement et la deuxième image agrandie a un deuxième grandissement qui est différent du premier grandissement, et
une image agrandie superposée formée au niveau du plan image prédéterminé durant l'intervalle d'affichage est une combinaison de la première image agrandie formée durant le premier sous-intervalle et de la deuxième image agrandie formée durant le deuxième sous-intervalle.

7. Le dispositif de la revendication 6, dans lequel la première portion de l'image virtuelle est une portion périphérique de l'image virtuelle, et la deuxième portion de l'image virtuelle est une portion fovéale de l'image virtuelle entourée par la portion périphérique.

8. Le dispositif de la revendication 7, dans lequel le premier grandissement de la première image agrandie est supérieur au deuxième grandissement de la deuxième image agrandie.

9. Le dispositif de la revendication 7 ou de la revendication 8, dans lequel :
le contrôleur est configuré pour commander l'élément d'affichage afin d'émettre une première lumière d'image représentant du contenu de la portion périphérique de l'image virtuelle et une deuxième lumière d'image représentant du contenu de la portion fovéale de l'image virtuelle, et
le contrôleur est configuré pour commander l'ensemble lentille afin de fournir une première puissance optique à la première lumière d'image se propageant de l'élément d'affichage à la région oculaire, et de fournir une deuxième puissance optique à la deuxième lumière d'image se propageant de l'élément d'affichage à la région oculaire, la première puissance optique étant supérieure à la deuxième puissance optique ;
de préférence dans lequel le contrôleur est configuré pour commander le commutateur de polarisation de l'ensemble lentille durant le premier sous-intervalle et le deuxième sous-intervalle afin de fournir un premier chemin optique à la première lumière d'image se propageant de l'élément d'affichage à la région oculaire durant le premier sous-intervalle, et de fournir un deuxième chemin optique à la deuxième lumière d'image se propageant de l'élément d'affichage à la région oculaire durant le deuxième sous-intervalle, le premier chemin optique étant plus court que le deuxième chemin optique.

10. Le dispositif de n'importe quelle revendication précédente, dans lequel le contrôleur est configuré pour :
commander l'élément d'affichage afin de commuter entre l'affichage de la première sous-image virtuelle et l'affichage de la deuxième sous-image virtuelle à une fréquence prédéterminée, et
commander le commutateur de polarisation afin de commuter entre le fonctionnement dans l'état de commutation et le fonctionnement dans l'état de non-commutation à la fréquence prédéterminée ;
de préférence dans lequel la fréquence prédéterminée est d'au moins 60 Hz.

11. Le dispositif de n'importe quelle revendication précédente, dans lequel :
le réflecteur sélectif en polarisation est configuré pour transmettre une lumière ayant une première polarisation, et réfléchir une lumière ayant une deuxième polarisation qui est orthogonale à la première polarisation, et
la première polarisation et la deuxième polarisation sont des polarisations circulaires ayant des sens contraires ;
de préférence dans lequel la lentille transmissive sélective en polarisation est configurée pour faire converger une lumière ayant la première polarisation et faire diverger une lumière ayant la deuxième polarisation.

12. Un procédé, comprenant :
durant un premier sous-intervalle d'un intervalle d'affichage,
la commande, par un contrôleur, d'un élément d'affichage afin d'afficher une première sous-image virtuelle incluant du contenu d'une première portion d'une image virtuelle ; et
la commande, par le contrôleur, d'un commutateur de polarisation inclus dans un ensemble lentille afin de fonctionner dans un état de commutation, l'ensemble lentille incluant un réflecteur partiel non sélectif en polarisation, un réflecteur sélectif en polarisation et le commutateur de polarisation disposés au niveau de côtés opposés du réflecteur partiel non sélectif en polarisation, une lentille transmissive sélective en polarisation disposée entre le commutateur de polarisation et le réflecteur partiel non sélectif en polarisation, et un polariseur disposé entre le commutateur de polarisation et une région oculaire ; et
durant un deuxième sous-intervalle de l'intervalle d'affichage,
la commande, par le contrôleur, de l'élément d'affichage afin d'afficher une deuxième sous-image virtuelle incluant du contenu d'une deuxième portion de l'image virtuelle ; et
la commande, par le contrôleur, du commutateur de polarisation afin de fonctionner dans un état de non-commutation ;
dans lequel l'ensemble lentille est configuré pour fournir deux chemins optiques différents à des lumières d'image émises par l'élément d'affichage vers la région oculaire.

13. Le procédé de la revendication 12, comprenant en outre :
la récupération, par le contrôleur, de données d'image de l'image virtuelle ; et
le partitionnement, par le contrôleur, des données d'image en une première portion de données d'image représentant le contenu de la première portion de l'image virtuelle et une deuxième portion de données d'image représentant le contenu de la deuxième portion de l'image virtuelle.

14. Le procédé de la revendication 12 ou de la revendication 13, comprenant en outre :
durant le premier sous-intervalle, la formation, par l'ensemble lentille, au niveau d'un plan image prédéterminé, d'une première image agrandie de l'élément d'affichage affichant la première sous-image virtuelle ; et
durant le deuxième sous-intervalle, la formation, par l'ensemble lentille, au niveau du plan image prédéterminé, d'une deuxième image agrandie de l'élément d'affichage affichant la deuxième sous-image virtuelle,
dans lequel une image agrandie superposée formée au niveau du plan image prédéterminé durant l'intervalle d'affichage est une combinaison de la première image agrandie formée durant le premier sous-intervalle et de la deuxième image agrandie formée durant le deuxième sous-intervalle, et
dans lequel la première image agrandie a un premier grandissement et la deuxième image agrandie a un deuxième grandissement qui est différent du premier grandissement ;
de préférence dans lequel la première portion de l'image virtuelle est une portion périphérique de l'image virtuelle, et la deuxième portion de l'image virtuelle est une portion fovéale de l'image virtuelle entourée par la portion périphérique ;
de préférence encore dans lequel le premier grandissement de la première image agrandie est inférieur au deuxième grandissement de la deuxième image agrandie.

15. Le procédé de n'importe lesquelles des revendications 12 à 14, comprenant en outre :
la commande, par le contrôleur, de l'élément d'affichage afin de commuter entre l'affichage de la première sous-image virtuelle et l'affichage de la deuxième sous-image virtuelle à une fréquence prédéterminée ; et
la commande, par le contrôleur, du commutateur de polarisation afin de commuter entre le fonctionnement dans l'état de commutation et le fonctionnement dans l'état de non-commutation à la fréquence prédéterminée,
dans lequel la fréquence prédéterminée est d'au moins 60 Hz.
